# EUROPEAN PATENT APPLICATION

(11) **EP 2 456 219 A1**
(43) Date of publication of application: **23.05.2012**
(21) Application number: 10799628.2
(22) Date of filing: 14.07.2010
(51) Int. Cl.: H04N 13/04, G09G 5/00, G09G 5/36, H04N 5/92, H04N 7/173

(54) **VIDEO PLAYBACK DEVICE**

(30) Priority: 14.07.2009 JP 2009165635; 24.11.2009 JP 2009265967; 03.03.2010 JP 2010046177
(71) Applicant: Panasonic Corporation, Kadoma-shi Osaka 571-8501 (JP)
(72) Inventor: TAKIGAWA, Shinichirou, Chuo-ku Osaka-shi Osaka 540-6207 (JP); OKUDA, TAadayoshi, Chuo-ku Osaka-shi Osaka 540-6207 (JP); KUNO, Yoshiki, Chuo-ku Osaka-shi Osaka 540-6207 (JP)
(74) Representative: Unland, Jochen Hermann
(86) International application number: PCT/JP2010/004565
(87) International publication number: WO 2011/007564

(57) **Abstract**

An image reproducing apparatus capable of outputting a 3D image signal or a non-3D image signal which can display a stereoscopic or a non-stereoscopic image to an image display apparatus, including: an AV processing unit operable to input data of contents and generate the 3D or non-3D image signal from the contents data; an output unit operable to output the 3D or non-3D image signal generated by the AV processing unit to the display apparatus in accordance with a 3D image output format being a format for outputting an image signal for stereoscopic display; and a receiving unit operable to receive an instruction inputted by a user. In a case where the receiving unit receives the instruction to display the contents in non-3D images when the output unit outputs the 3D image signal in accordance with the 3D image output format, the AV processing unit generates the non-3D image signal from the contents data and the output unit outputs the non-3D image signal to the display apparatus in accordance with the 3D image output mode.

## Description

### Technical Field

The technical field relates to an image reproducing apparatus for outputting an image signal to an image display apparatus, and more particularly to an image reproducing apparatus capable of outputting an image signal which can be reproduced as a stereoscopic image.

### Background Art

It is a long-known conventional technique to present images with a parallax therebetween to left and right eyes to obtain the effect of stereoscopic view (hereinafter, such a technique for obtaining the effect of stereoscopic view is called "binocular 3D technique").

In recent years, the development of 3D television technology that enables the display of stereoscopic images is rapidly advancing. There are factors behind the technology advancement; box-office hits of 3D moves released in movie theatres, pilot BS digital broadcasts in 3D by some broadcast stations, launch of sales of 3D-compliant contents recorded on disc media such as DVD. Under the circumstances, a few makers already started the commercial launch of 3D televisions (3D image display apparatuses). Thus, the environment where average consumers can enjoy 3D images is now rapidly taking a concrete shape.

There are two major methods in the binocular 3D technique for watching 3D televisions; naked-eye viewing, and wearing glasses specially developed for 3D. The naked-eye viewing includes, for example, parallax barrier method and lenticular method. Generally known problems of the naked-eye viewing are, for example, limited viewing position and view-spoiling barriers in the parallax barrier method, and a significantly lowered resolution and view-spoiling lenses in the lenticular method.

Examples of the 3D viewing wearing the dedicated 3D glasses are disclosed in Japanese Patent No. 3796414 wherein a viewer watches a television covered with a special film with polarizing glasses on, and JP6-254046A and JP7-336729A wherein a viewer wears liquid crystal shutter glasses to watch.

Further, as a standard for transmission of an image signal which can display a 3D image from an image reproducing apparatus to an image display apparatus, an HDMI (High Definition Multimedia Interface) Ver. 1.4 is defined. To protect copyright, the HDMI Ver. 1.4 performs mutual authentication and generates an encryption key between an apparatus which transmits an image signal (transmission-side apparatus) and an apparatus which receives the image signal (reception-side apparatus) based on algorithm defined by HDCP which is a copyright protection standard used for the HDMI transmission of image and audio signals. The transmission-side apparatus encrypts image data using the encryption key thus generated and transmits the encrypted image data in the form of image signals to a transmission path. The reception-side apparatus decrypts the received image signals using the encryption key and displays images thereby obtained.

The HDMI demands that mutual authentication be implemented when a format of the image signal transmitted by the transmission-side apparatus is switched to and from a format for transmitting an image signal for displaying an image that can be stereoscopically viewed (3D image signal) and a format for transmitting a 2D image signal. Therefore, when an image reproducing apparatus transmits an image signal to an image display apparatus in compliance with the HDMI Ver. 1.4, mutual authentication is implemented in accordance with the format change of the image signal to be transmitted every time when the image signal is switched from the 3D image signal to 2D image signal or from the 2D image signal to 3D Image signal.

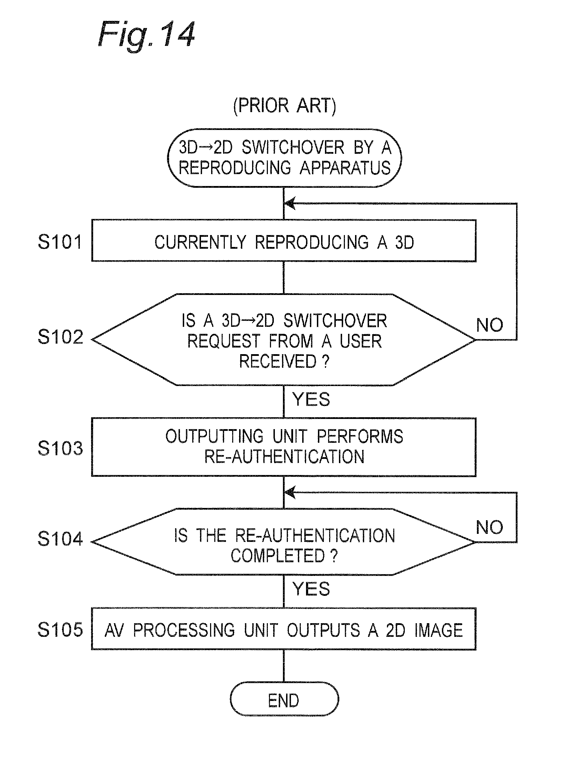

Below is described an operation carried out by a conventional image reproducing apparatus when an image signal to be transmitted from the image reproducing apparatus to an image display apparatus is changed from the 3D image signal to 2D image signal. Fig. 14 is a flow chart illustrating processing steps in the operation by the image reproducing apparatus when the reproduction of 3D images currently performing is switched to the reproduction of 2D images.

The image reproducing apparatus outputs images of 3D contents including 3D image stream signals in the form of 3D image signals. The image display apparatus displays 3D images based on the inputted 3D image signals (S101). The mode of the HDMI interface at the time between an image signal output unit of the image reproducing apparatus and an input unit= of the image display apparatus (format on a transmission path between the apparatuses) is the format for 3D image signal.

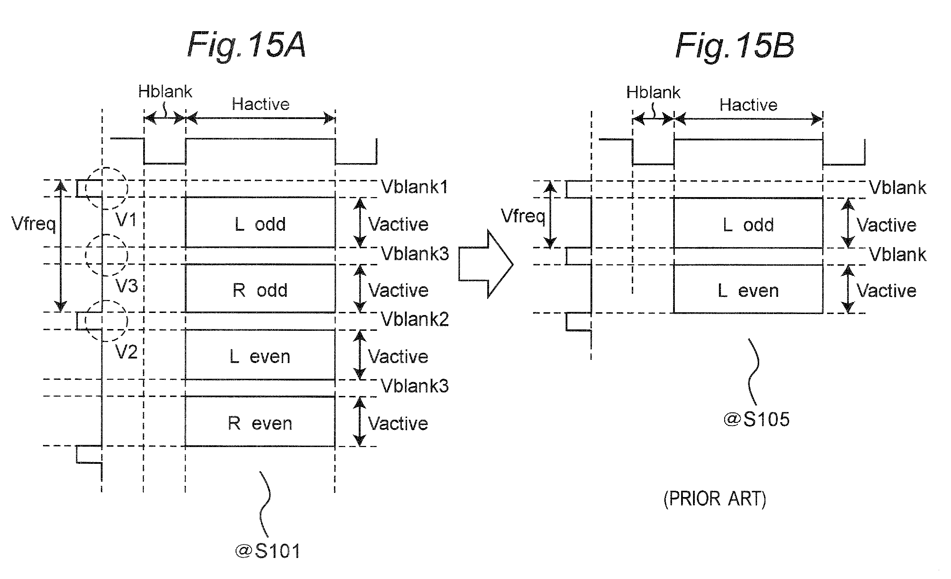

Fig. 15A illustrates a format used when the 3D image signal is transmitted in Step S101. As illustrated in a format @S101, left eye images (L odd, L even) and right eye images (R odd, R even), for example, are transmitted in turn in the format for 3D image signal.

Referring to Fig. 14, in Step S102, the image reproducing apparatus determines whether a user inputted an instruction to display the contents in 2D images using, for example, a remote controller. More specifically, contents of a signal received by a remote control signal receiving unit is transmitted to a controller (for example, CPU), and the controller determines whether the signal includes the instruction to display the contents in 2D images on the image display apparatus. When the controller determines that the signal includes the instruction ("YES" in Step S102), the operation proceeds to Step S103.

In Step S103, the controller instructs an AV processing unit (for example, decoder) to stop outputting the image signals, and instructs an output unit to re-authenticate the HDMI interface (I/F). More specifically, the controller instructs the output unit to change the image signal format of the HDMI interface to the format for 2D image signal. The output unit re-authenticates the HDMI interface between the output unit and the input unit of the image display apparatus and changes the format of the HDMI interface.

It takes a few seconds to re-authenticate the HDMI interface. The image display apparatus displays thereon a black screen (may be called "blackout") or continues to display an image received immediately before the mutual authentication started (may be called "screen freeze") because the image signal output from the image reproducing apparatus is suspended.

When the controller detects completion of the HDMI interface re-authentication, completion of the processing step for the format change, and completion of the format change to the format for 2D image signal ("YES" in Step S104), the controller instructs the AV processing unit to output the 2D image signals. Then, the operation proceeds to Step S105.

The AV processing unit which was instructed to output the 2D image signals outputs the 2D image signals to the output unit, and the output unit transmits the 2D image signals in the format for 2D image signal to the image display apparatus. The image display apparatus displays the 2D images (S105).

Fig. 15B illustrates a format used when the 2D image signals are transmitted in Step S105. As illustrated in a format @S105, left eye images (L odd, L even) alone, for example, are transmitted in the format for 2D image signal.

When the 3D image signals outputted from the image reproducing apparatus are switched to the 2D image signals (or 2D image signal to 3D image signal), mutual authentication between the image reproducing apparatus and the image display apparatus then takes a few seconds. For the few seconds before the mutual authentication is completed, the image display apparatus is unable to receive the image signals, resulting in the blackout or screen freeze. Due to the disadvantage, a user misses some images which could have been displayed between the start and end of the mutual authentication.

As described so far, when the image display apparatus displays the images in compliance with the HDMI based on the image signals transmitted by the image reproducing apparatus, a number of processing steps (including authentication) are required for switchover to and from the stereoscopic image display (3D display) and the non-stereoscopic image display (2D display). Thus, the switchover is conventionally far from easy and smooth.

### Citation list

### Patent Literature

Patent Literature 1: JP3796414B
Patent Literature 2: JP6-254046A
Patent Literature 3: JP7-336729A

### Summary of Invention

### Technical Problem

The problem involved in the prior art considered, the apparatuses being capable of performing smooth switchover to and from stereoscopic image display (3D display) and non-stereoscopic image display (2D display) are provided.

### Solution to Problem

An aspect provides an image reproducing apparatus capable of outputting a 3D image signal which can display a stereoscopic image or a non-3D image signal which can display a non-stereoscopic image to an image display apparatus. The image reproducing apparatus includes: an AV processing unit operable to input data of contents and generate the 3D image signal or the non-3D image signal from the inputted data of the contents; an output unit operable to output the 3D image signal or the non-3D image signal generated by the AV processing unit to the image display apparatus in accordance with a 3D image output format, the 3D image output format being a format for outputting an image signal for stereoscopic image display; and a receiving unit operable to receive an instruction inputted by a user. In a case where the receiving unit receives the instruction to display the contents in non-3D images when the output unit outputs the 3D image signal in accordance with the 3D image output format, the AV processing unit generates the non-3D image signal from the data of the contents and the output unit outputs the non-3D image signal to the image display apparatus in accordance with the 3D image output mode.

In the aspect, it is preferable that the image reproducing apparatus may further include an input unit operable to receive an instruction inputted to the image display apparatus by the user from the image display apparatus, wherein, in a case where the input unit receives an instruction to switch an image display on the image display apparatus from a 3D display to a non-3D display when the output unit outputs the 3D image signal in accordance with the 3D image output mode, the AV processing unit generates the non-3D image signal from the data of the contents and the output unit outputs the non-3D image signal to the image display apparatus in accordance with the 3D image output mode.

In the aspect, it is preferable that the AV processing unit may determine whether the contents are 3D contents or non-3D contents from identification information of the contents included in the data of the contents and, in a case where the receiving unit receives the instruction to switch contents to be reproduced from the contents to another contents and the AV processing unit determines that the another contents are the non-3D contents when the output unit outputs the 3D image signal in accordance with the 3D image output mode, the AV processing unit may generate the non-3D image signal from data of the another contents and the output unit may output the non-3D image signal to the image display apparatus in accordance with the 3D image output mode.

In the aspect, it is preferable that the AV processing unit may input the data of the contents and the identification information of the contents, and both of the data of the contents and the identification information of the contents may be recorded in a recording medium.

In the aspect, it is preferable that the AV processing unit may input the data of the contents and the identification information of the contents, and both of the data of the contents and the identification information of the contents may be received from outside of the image reproducing apparatus.

In the aspect, it is preferable that the another contents may be data broadcast including the non-3D contents.

In the aspect, it is preferable that the 3D image signal may include a left eye image which is an image for a left eye and a right eye image which is an image for a right eye and the left eye image and the right eye image may include parallax therebetween, and, in a case where the receiving unit receives the instruction to display the contents in non-3D images when the output unit outputs the 3D image signal in accordance with the 3D image output format, the AV processing uni t may generate the non-3D image signal that includes only either one of the left eye image and the right eye image.

Another aspect provides an image reproducing apparatus capable of outputting a 3D image signal which can display a stereoscopic image or a non-3D image signal which can display a non-stereoscopic image to an image display apparatus. The image reproducing apparatus includes: an AV processing unit operable to input data of contents and generate the 3D image signal or the non-3D image signal from the inputted data of the contents; an output unit operable to output the 3D image signal or the non-3D image signal generated by the AV processing unit to the image display apparatus in accordance with a 3D image output format, the 3D image output format being a format for outputting an image signal for stereoscopic image display; and an receiving unit operable to receive an instruction inputted by a user. In a case where the receiving unit receives the instruction for special reproduction of the contents when the output unit outputs the 3D image signal 1 in accordance with the 3D image signal output format, the AV processing unit generates the non-3D image signal from the data of the contents and the output unit outputs the non-3D image signal to the image display apparatus in accordance with the 3D image output format.

In the another aspect, it is preferable that the special reproduction may include at least one of fast forward reproduction and fast rewind reproduction.

A further aspect provides an image reproducing apparatus capable of outputting a 3D image signal which can display a stereoscopic image or a non-3D image signal which can display a non-stereoscopic image to an image display apparatus. The image reproducing apparatus includes: an AV processing unit operable to input data of contents and generate the 3D image signal on which information indicative of a stereoscopic image is superposed or the non-3D image signal on which the information indicative of the stereoscopic image is not superposed from the inputted data of the contents; an output unit operable to output the 3D image signal or the non-3D image signal generated by the AV processing unit to the image display apparatus in accordance with a non-3D image output format, the non-3D image output format being a format for outputting an image signal for non-stereoscopic image display; and an receiving unit operable to receive an instruction inputted by a usher. The AV processing unit (1) determines whether the contents are 3D contents or non-3D contents from identification information of the contents included in the data of the contents; (2) generates the 3D image signal from the data of the contents in the non-3D image output format when the contents are determined as the 3D contents; and (3) generates the non-3D image signal from the data of the contents in the non-3D image output format when the contents are determined as the non-3D contents. In a case where the receiving unit receives the instruction to switch contents to be reproduced from the contents to another contents and the AV processing unit determines that the another contents are the 3D contents when the output unit outputs the non-3D image signal in accordance with the non-3D image output mode, the AV processing unit generates the 3D image signal from data of the another contents and the output unit outputs the 3D image signal to the image display apparatus in accordance with the non-3D image output format.

In the further aspect, it is preferable that when the contents are determined as the non-3D contents, the AV processing unit may generate the non-3D image signal for a non-stereoscopic image display, on which information indicative of a non-stereoscopic image is superposed.

Yet a further aspect provides a semiconductor device. The semiconductor device includes: a decoding unit operable to input data of contents and generate a 3D image signal which can display a stereoscopic image or a non-3D image signal which can display a non-stereoscopic image from the inputted data of the contents; a 3D/non-3D display switchover instructing unit operable to receive an instruction for image display of the contents and instruct the decoding unit to generate either one of the 3D image signal and the non-3D image signal based on the received instruction; and a signal output unit operable to output an image signal generated by the decoding unit in accordance with a 3D image output format, the 3D image output format being a format for outputting an image signal for stereoscopic image display.

Still yet a further aspect provides a method for generating an image signal and outputting the generated image signal to an image display apparatus in an image reproducing apparatus capable of outputting a 3D image signal which can display a stereoscopic image or a non-3D image signal which can display a non-stereoscopic image. The method includes: inputting data of contents by an AV processing unit; generating the 3D image signal in a 3D image output format, the 3D image output format being a format for outputting an image signal for stereoscopic image display, from the inputted data of the contents by the AV processing unit, and outputting the 3D image signal received from the AV processing unit to the image display apparatus in accordance with the 3D image output mode by an output unit; receiving an instruction inputted by a user to switch an image display on the image display apparatus from a 3D display to a non-3D display by a receiving unit; and after the receiving, generating the non-3D image signal by the AV processing unit in accordance with the received instruction, and outputting the non-3D image signal to the image display apparatus in accordance with the 3D image output mode by the output unit.

### Advantageous Effects of Invention

The image reproducing apparatuses according to the aspect can smoothly switch to and from stereoscopic image display (3D display) and non-stereoscopic image display (2D display).

### Brief Description of Drawings

Fig. 1 is a block diagram illustrating a structure of a 3D image reproduction and display system including an image reproducing apparatus according to an embodiment;
Fig. 2 is a block diagram illustrating a structure of an image display apparatus according to the embodiment;
Fig. 3 is a block diagram illustrating a structure of an image reproducing apparatus according to the embodiment;
Fig. 4 is a flow chart illustrating an operation for switching to and from stereoscopic image display and non-stereoscopic image display in the image reproducing apparatus according to the embodiment;
Figs. 5A and 5B are illustrations of image signals for stereoscopic image display and non-stereoscopic image display transmitted by the image reproducing apparatus according to the embodiment in a HDMI Ver. 1.4-compliant format;
Fig. 6 is a flow chart illustrating an operation for switching to and from stereoscopic image display and non-stereoscopic image disp-ay for special reproduction in an image reproducing apparatus according to a second embodiment;
Fig. 7 is a flow chart illustrating an operation for switching to and from stereoscopic image display and non-stereoscopic image display for contents switchover in an image reproducing apparatus according to a third embodiment;
Fig. 8 is a block diagram illustrating a detailed structure of a second AV processing unit provided in the image reproducing apparatuses according to the first to fourth embodiment;
Fig. 9 is a conceptual view illustrating depth in a stereoscopic image;
Fig. 10 is a descriptive illustration of an amount of offset of additional information superposed on an image;
Fig.11 is a descriptive illustration of a plane synthesis model;
Fig. 12 is a flow chart illustrating an operation for adjusting an amount of offset in an image reproducing apparatus according to a fifth embodiment;
Fig. 13 is a block diagram illustrating a detailed structure of a second AV processing unit in the image reproducing apparatus according to the fifth embodiment;
Fig. 14 is a flow chart illustrating an operation for switching to and from 3D and 2D by a conventional image reproducing apparatuses; and
Figs. 15A and 15B are illustrations of 3D and 2D image signals transmitted by the conventional image reproducing apparatuses.

### Description of Embodiments

Hereinafter, embodiments are described in detail.

In the embodiments, a "3D image signal" is an image signal which can display a stereoscopic image (3D image) on an image display apparatus. A "2D image signal (non-3D image signal)" is an image signal which can display a non-stereoscopic image (2D image) on the image display apparatus.

In the embodiments, a "3D image output mode" is an output mode for outputting, for example, a left eye image (image for left eye) and a right eye image (image for right eye) as a one-frame image signal from an image reproducing apparatus to an image display apparatus (see Fig. 15A). In a transmission path which connects the image reproducing apparatus to the image display apparatus, an image signal format suitable for transmitting an image signal in the "3D image output mode" is called a format for 3D image output mode. The image display apparatus receives the image signal transmitted in the format for 3D image output mode to display, from the one-frame image signal, the left eye image and the right eye image as an image constituting one frame. On the contrary, a "2D image output mode" is an output mode for outputting an ordinary image signal having a single image as a one-frame image signal (see Fig. 15B). The image display apparatus receives the image signal transmitted in the format for 2D image output mode to reproduce, from the one-frame image signal, a single image as an image constituting one frame.

According to the embodiments, the image display apparatus has an image display mode ("3D display mode") wherein a plurality of images (left eye image and right eye image) are displayed as a one-frame image to display a stereoscopic image, and a "2D (non-3D) display mode" wherein a single image is displayed as a one-frame image to display a non-stereoscopic image. In the 3D display mode, the image display apparatus can display the left eye image and the right eye image as a one-frame image. On the other hand, the apparatus can display a single image as a one-frame image in the 2D display mode.

### First embodiment

A first embodiment relates to an image reproducing apparatus which generates an image signal based on image data included in a medium such as broadcast wave, optical disc, or hard disk (image source) and transmits the generated image signal to an image display apparatus. The apparatus according to the present embodiment can transmit an image signal which can display a stereoscopic image (3D image signal) on the image display apparatus and an image signal (2D image signal) which can display a non-stereoscopic image (2D image signal) thereon to the image display apparatus. Further, the image reproducing apparatus can smoothly change the image to be displayed on the image display apparatus to and from the stereoscopic and non-stereoscopic images.

When the image reproducing apparatus according to the present embodiment receives an instruction to change the current image display mode to the 2D display mode during the reproduction of 3D contents on the image display apparatus in the 3D display mode, the apparatus can generate a 3D image signal from one of the two images constituting a 3D image (left eye image and right eye image to be paired therewith) and output the generated 3D image signal to image display apparatus in the output mode for 3D image signal. The image display apparatus which receives the 3D image signal thus generated continues its operation in the 3D display mode and displays an image based on the 3D image signal. Thus, the image display apparatus can display the 3D contents in 2D images. The image reproducing apparatus can change the image display on the image display apparatus from the 3D image display to the 2D image display without mutual authentication which was conventionally required between the image reproducing apparatus and the image display apparatus. According to the technical advantage, the image reproducing apparatus can smoothly change the image to be displayed on the image display apparatus to and from the stereoscopic image display (3D display) and the non-stereoscopic image display (2D display).

### 1. Configuration of 3D Image Reproduction and Display System

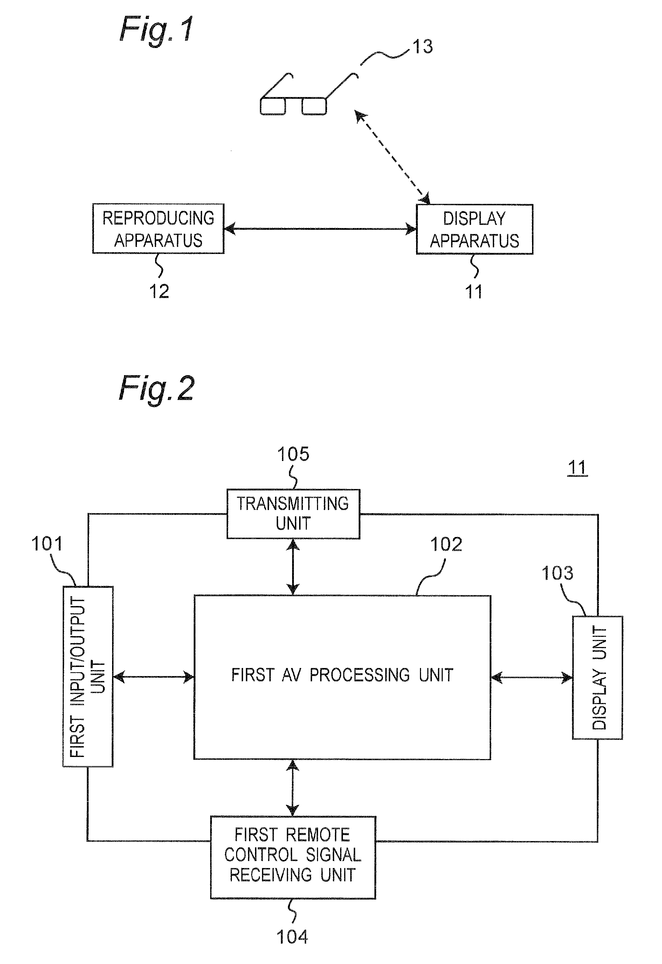

The image reproducing apparatus according to the first embodiment is described below with reference to Figs. 1 to 5. Fig. 1 is a block diagram illustrating an overall structure of a 3D image reproduction and display system including an image reproducing apparatus 12 according to the first embodiment. In Fig. 1, an image display apparatus 11 is, for example, a display which displays thereon 3D images. The image reproducing apparatus 12 is an apparatus which receives an image signal from a recording medium such as optical disc, network such as the Internet, or broadcast waves and generates a 3D image signal to output the generated 3D image signal. Stereoscopic glasses 13 are polarizing glasses equipped with a liquid crystal shutter which separates the 3D image displayed by the image display apparatus 11 into a left eye image and a right eye image.

Fig. 2 is a block diagram illustrating a structure of the image display apparatus 11 according to the first embodiment. A first input/output unit 101 of the image display apparatus 11 receives an output from the image reproducing apparatus 12 illustrated in Fig. 1. The first input/output unit 101 may be, for example, a signal input unit compliant with HDMI (High Definition Multimedia Interface) Ver. 1.4. A first AV processing unit 102 receives an output from the first input/output unit 101 and processes image and audio signals to generate a drive signal which drives a display unit 103. The display unit 103 receives an output from the first AV processing unit 102 and displays a 3D image. A first remote control signal receiving unit 104 receives a signal outputted from a remote controller of the image display apparatus manipulated by a user. A transmitting unit 105 transmits a synchronizing signal for selecting one of the left eye image (L) and the right eye image (R) to be blocked to the stereoscopic glasses 13 illustrated in Fig. 1 in response to the output of the first AV processing unit 102. The synchronizing signal is conventionally transmitted by using an infrared signal, for example.

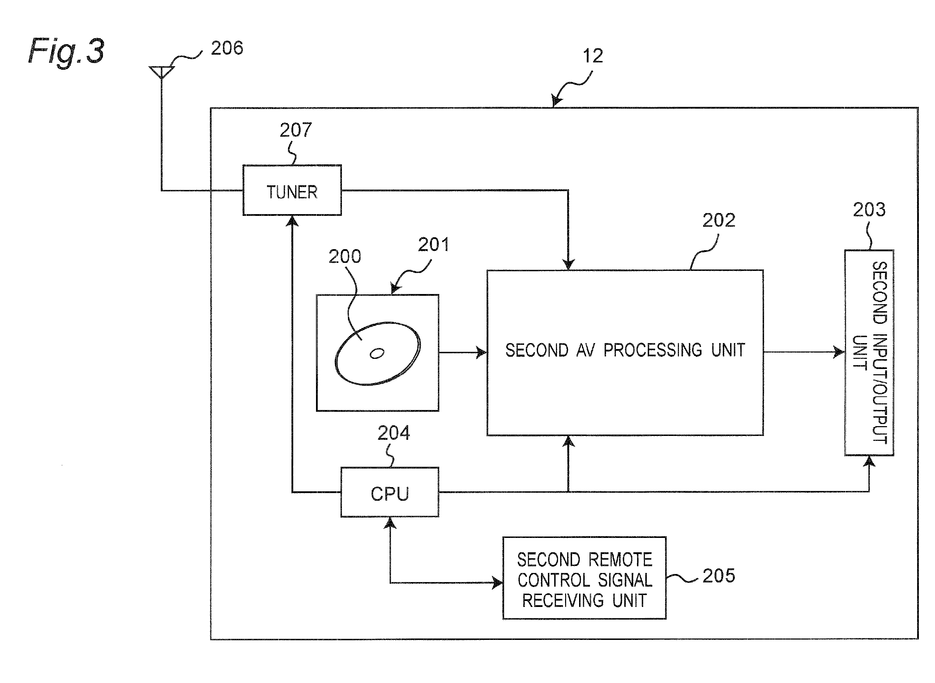

Fig. 3 is a block diagram illustrating a structure of the image reproducing apparatus 12 according to the first embodiment. In Fig. 3, a disc 200 may be a recording medium for recording a 3D image stream signal such as optical disc or a HDD. In the disc 200 are recorded, for example, image data and audio data such as video images, graphic images, and subtitled images in the form of compressed stream signals. The disc 200 may record therein 3D contents or 2D contents. A disc drive unit 201 reads the stream signal recorded in the disc 200. An antenna 206 is provided to receive broadcast wave. A tuner 207 may be a demodulator for converting the broadcast wave received by the antenna 206 into digital image stream signals (video, audio, graphic and subtitle). The contents demodulated by the tuner 207 may be 3D image stream data or 2D image stream data.

A second AV processing unit 202 converts the image stream signal obtained from a disc drive unit 201 or the tuner 207 into image data. In the case where its image stream is 3D image stream, the second AV processing unit 202 outputs a 3D image signal in which the left eye image and the right eye image are multiplexed. A second input/output unit 203 outputs the 3D image signal received from the second AV processing unit 202 to the image display apparatus 11 illustrated in Fig. 1. The second input/output unit 203 may be a signal output unit compliant with HDMI Ver. 1.4. To output the 3D image signal, the output mode for 3D image signal is conventionally used in a format on the transmission path between the second input/output unit 203 and the input/output unit 101 of the display apparatus 11. To output the 2D image signal, the output mode for 2D image signal may be used in the format on the transmission path between the second input/output unit 203 and the input/output unit 101 of the display apparatus 11. The second input/output unit 203 thus functioning as the output unit can also function as an input unit which receives the output of the image display apparatus 11.

A second remote control signal receiving unit 205 receives a control instruction for the image reproducing apparatus 12 by a signal from a remote controller of the image reproducing apparatus manipulated by a user. A CPU 204 receives the instruction inputted by the user and received from the second remote control signal receiving unit 205 and thereby controls the disc drive unit 201, second AV processing unit 202, second input/output unit 203, and tuner 207 and the like.

In the system configured as described so far, the image reproducing apparatus 12 reads 3D video stream from the recording medium, network, or broadcast waves in response to the user's operation of the remote controller and reproduces the read data. The image reproducing apparatus 12 then multiplexes the image signal of the left eye image and the image signal of the right eye image and outputs the multiplexed image signals to the image display apparatus 11 illustrated in Fig. 1. The image display apparatus 11 displays the inputted left eye image and right eye image on the display in a time-division manner. At the time, the image display apparatus 11 notifies the stereoscopic glasses 13 illustrated in Fig. 1 of a timing of the time-division shift in the form of an infrared synchronizing signal. The stereoscopic glasses 13 changes a transmittance factor of the liquid crystal shutter depending on the synchronizing signal received from the image display apparatus 11 to alternately block the field of view with one of the left and right eyes through the glasses, so that the left eye images are presented to the left eye only and the right eye images are presented to the right eye only. Thus, the 3D stereoscopic view is realized.

### 2. 3D - 2D Image Display Switching Operation

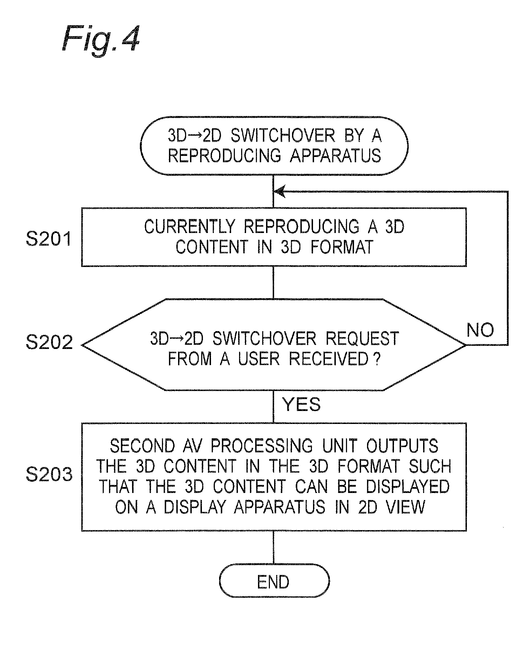

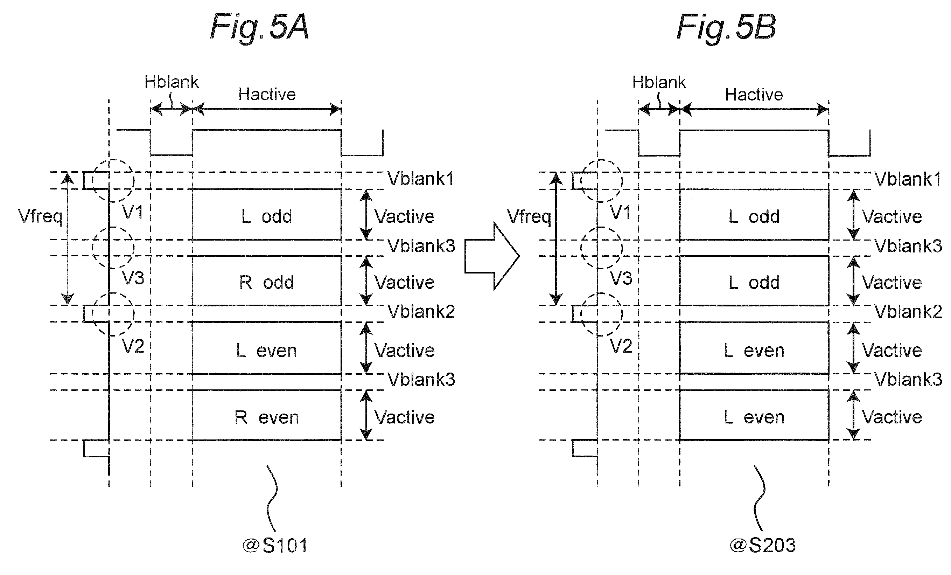

Next, an operation for switching to and from 3D image reproduction and 2D image reproduction carried out by the image reproducing apparatus according to the first embodiment is described referring to Figs. 4 and 5.

The image reproducing apparatus 12 according to the present embodiment can display 3D contents including 3D image stream data in 2D images on the image display apparatus 11. To display the images of contents reproduced by the second AV processing unit 202, a user can transmit an instruction to switch from the 3D image display to the 2D image display to the image reproducing apparatus 12 using an indicator such as a remote controller. Fig. 4 is a flow chart illustrating processing carried out by the image reproducing apparatus 12 when the image reproducing apparatus 12 receives the instruction to switch the image display mode between 3D and 2D.

In the case where the image display mode is the 3D display mode, the image reproducing apparatus 12 generates a 3D image signal from a 3D image stream signal of 3D contents and outputs the generated 3D image signal in the output mode for 3D image signal, in other words, 3D format. The image display apparatus 11 displays a 3D image based on the 3D image signal (S201). The HDMI interface mode between the second input/output unit 203 of the image reproducing apparatus 12 and the first input/output unit 101 of the image display apparatus 11 is the output mode for 3D image signal (format on the transmission path between the apparatuses).

Fig. 5A illustrates a format used to transmit the 3D image signal of the contents in the 3D display mode selected as the image display mode of the contents as described in Step S201. As illustrated in a format @S101, the left eye images (L odd, L even) and right eye images (R odd, R even), for example, are transmitted in turn in the output mode for 3D image signal.

Then, the image reproducing apparatus 12 determines whether the instruction to switch the image display mode of the contents to the 2D display mode is received from a user through, for example, the remote controller (S202). More specifically, contents of a signal received by the second remote control signal receiving unit 205 are transmitted to the CPU 204, and the CPU 204 determines whether the signal includes the instruction to switch the image display mode of the contents from the 3D display mode to the 2D display mode. When the CPU 204 determines that the signal includes the instruction ("eyes" in Step S202), the operation proceeds to Step S203.

According to the description of the preceding paragraph, the instruction determined in Step S202 is inputted to the image reproducing apparatus 12 via the remote controller. The instruction, however, may be inputted to the image reproducing apparatus 12 through a device other than the remote controller. For example, the instruction may be inputted to the image reproducing apparatus 12 from the remote controller of the image display apparatus 11 through the image display apparatus 11.

When the image reproducing apparatus 12 receives the instruction to switch the image display mode of the contents from the 3D display mode to the 2D display mode, the CPU 204 transmits an instruction to generate an image signal from the 3D image stream signal to the second AV processing unit 202, in which the image signal can be outputted to the image display apparatus 11 in the format of the output mode for 3D image signal, and the 2D (non-stereoscopic) image can be displayed when the image signal thus outputted is displayed on the image display apparatus 11 (S203). The image signal may be generated such that the left eye image and the right eye image to be paired therewith are multiplexed, and the multiplexed pair of left eye image and right eye image desirably includes no parallax therebetween. For example, the multiplexed pair of left eye image and right eye image is desirably the same image. Below is described in detail the format for the image signal output in the step described in this section.

Fig. 5B illustrates an example of a format used when the image reproducing apparatus 12 outputs the non-sterecscopic (2D) image in the format of the output mode for 3D image signal (format @S203).

As compared to the format @S101, the format @S203 may be exactly the same as the format @S101 other than different image contents outputted in a time-division manner. More specifically, in the format @S203, the left eye images alone or the right eye images alone are outputted in the format of the output mode for 3D image signal compliant with the HDMI Ver. 1.4.

In the format @S101, the image signals to be transmitted are "L odd", "R odd", "L even", and "R even". On the contrary, the image signals to be transmitted in the format @S203 are "L odd", "L odd", "L event", and "L even". Thus, the left eye images (L) alone (or the right eye images (R) alone) are transmitted.

In Step S201, the second input/output unit 203 outputs the image signal for the 3D display mode in such a format as the format @S101. In Step S203, the second input/output unit 203 outputs the non-3D (2D) image signal for the 2D display mode in such a format as the format @S203. The operation of the second AV processing unit 202 then is described below.

In Step S201, the second AV processing unit 202 outputs the left eye image (L) and the right eye image (R) to the second input/output unit 203 to output the 3D image signal in the output mode for 3D image signal. More specifically, "L odd", "R odd", "L even", and "R even" are outputted.

In Step S203 in which the image signal can still be outputted in the output mode for 3D image signal from the second input/output unit 203, the second AV processing unit 202 selectively outputs the left eye images (L) alone to the second input/output unit 203 so that the non-stereoscopic (2D) image is displayed when the image display apparatus 11 displays the image based on the image signal. More specifically, "L odd", "L odd", "L even", and "L even" are outputted.

As described, in Step S203, the image reproducing apparatus 12 transmits the left eye image (L) even at the time when the right eye image (R) should be transmitted in the format of the output mode for 3D image signal. Accordingly, the same images are continuously presented to a user's eyes. As a result, there is no longer parallax, and the user can recognize the images displayed by the image display apparatus 11 as non-3D (2D) images.

Thus, the second AV processing unit 202 of the image reproducing apparatus 12 can output the image signals by which the user can watch 2D images to the image display apparatus 11 without switching the image signal output mode of HDMI, that is, in the format of the output mode for 3D image signal.

In the present embodiment, the second AV processing unit 202 selectively outputs the left eye images (L) alone. The second AV processing unit 202 may selectively output the right eye images (R) alone.

The image reproducing apparatus 12 according to the first embodiment has the second AV processing unit 202, the second input/output unit 203, and the remote control signal receiving unit 205. The second AV processing unit 202 can receive the image stream signal of the stereoscopic (3D) contents and thereby generate the image signal for 3D display mode and the image signal for 2D display mode of the stereoscopic (3D) contents. The image signal for 3D display mode and the image signal for 2D display mode generated by the second AV processing unit 202 both have such a format that can be outputted to the image display apparatus through the transmission path authenticated in the output mode for 3D image signal (HDMI, interface mode). The image signal for 2D display mode generated by the second AV processing unit 202 based on the 3D image stream signal of 3D contents includes an image presented to the user's left eye and an image paired with the image and presented to the user's right eye, and there is no parallax between these images. Therefore, when the image display apparatus 11 displays the image signal for 2D display mode, the image thereby displayed is a 2D image. The second input/output unit 203 can be connected to the transmission path which is connected to the image display apparatus 11 to transmit the image signal to the image display apparatus 11. The transmission path may be a transmission path which demands mutual authentication between the image reproducing apparatus and the image display apparatus 11 when the format of the image signal inputted to the image display apparatus 11 is changed over. The second remote control signal receiving unit 205 can receive the instruction inputted by the user to the remote controller. In the case where the second remote control signal receiving unit 205 receives the instruction to switch image display mode from the 3D display mode to the 2D display mode while the format on the transmission path between the apparatuses is authenticated as the stereoscopic (3D) image format, the second AV processing unit 202 can decode the image stream signal of the stereoscopic (3D) contents into such a non-stereoscopic (2D) image signal that can be transmitted in the stereoscopic (3D) image format as the format on the transmission path between the apparatuses and displayed on the image display apparatus 11 (recognized by the user) as a non-stereoscopic (2D) image, and output the non-stereoscopic (2D) image signal.

In other words, the image reproducing apparatus 12 according to the present embodiment can output the 3D image signal and the non-3D (2D) image signal to the image display apparatus 11 using the format corresponding to the output mode for 3D image signal as the format on the transmission path between the image reproducing apparatus 12 and the image display apparatus 11 (HDMI interface mode). The image reproducing apparatus 12 can switch to and from the output of the 3D image signal and the output of the non-3D (2D) image signal by following the instruction received from the indicator, such as the remote controller, of the image reproducing apparatus 12. The image reproducing apparatus 12 can also switch to and from the output of the 3D image signal and the output of the non-3D (2D) image signal by following an instruction received from a device other than the remote controller of the image reproducing apparatus 12. For instance, the image reproducing apparatus 12 can receive an instruction from the remote controller of the image display apparatus 11 through the image display apparatus 11 and the transmission path (HDMI interface) to switch to and from the output of the 3D image signal and the output of the non-3D (2D) image signal by following the instruction.

The image reproducing apparatus 12 according to the first embodiment is an image reproducing apparatus capable of outputting the 3D image signal which can display a stereoscopic image or the non-3D image signal (2D image signal) which can display a non-stereoscopic image to the image display apparatus 11, the image reproducing apparatus 12 including: the second AV processing unit 202 operable to input therein data of the contents and generate the 3D image signal or the non-3D image signal from the inputted contents data; the second input/output unit 203 operable to output the 3D image signal or the non-3D image signal generated by the second AV processing unit 202 to the image display apparatus 1-1 in accordance with the 3D image output format which is the format for outputting the image signal for stereoscopic image display; and the second remote control signal receiving unit 205 operable to receive the instruction inputted by the user, wherein, in the case where the second remote control signal receiving unit 205 receives the instruction to display the contents in non-3D images when the second input/output unit 203 outputs the 3D image signal in accordance with the 3D image output format, the second AV processing unit 202 generates the non-3D image signal from the contents data, and the second input/output unit 203 outputs the generated non-3D image signal to the image display apparatus in accordance with the 3D image output mode.

As described so far, the image reproducing apparatus 12 according to the present embodiment does not re-authenticate the HDMI interface due to the format change thereof even after the instruction from the user to change the 3D image display to the 2D image display is received, thereby preventing interruption of the images resulting from the re-authentication. Therefore, the user can enjoy the contents without interruption of images resulting from the HDMI interface re-authentication, even after the user switches the image display mode of the 3D contents from the 3D image display mode to the 2D image display mode.

In the image reproducing apparatus 12, it does not require any particular processing to switch the 3D display to the 2D display. Therefore, the image reproducing apparatus 12 can reproduce the contents without break of images resulting from a number of processing steps carried out to switch the display mode.

### Second embodiment

An image reproducing apparatus according to a second embodiment is described below. The image reproducing apparatus according to the second embodiment is structurally and functionally equal to the image reproducing apparatus according to the first embodiment. The image reproducing apparatus further carries out the following operation for special reproduction such as fast forward and fast rewind.

When the special reproduction, such as fast forward and fast rewind, is directly performed to 3D image contents currently reproduced, a user may undergo stress such as eye strain.

To deal with the problem, when the special reproduction is performed to the 3D image contents currently reproduced on the image display apparatus in the 3D display mode, the image reproducing apparatus according to the second embodiment automatically changes the image display to the 2D display while performing the special reproduction to perform the special reproduction. In such an automatic display change, the image display mode can be smoothly switched to and from the stereoscopic image display (3D display) and the non-stereoscopic image display (2D display).

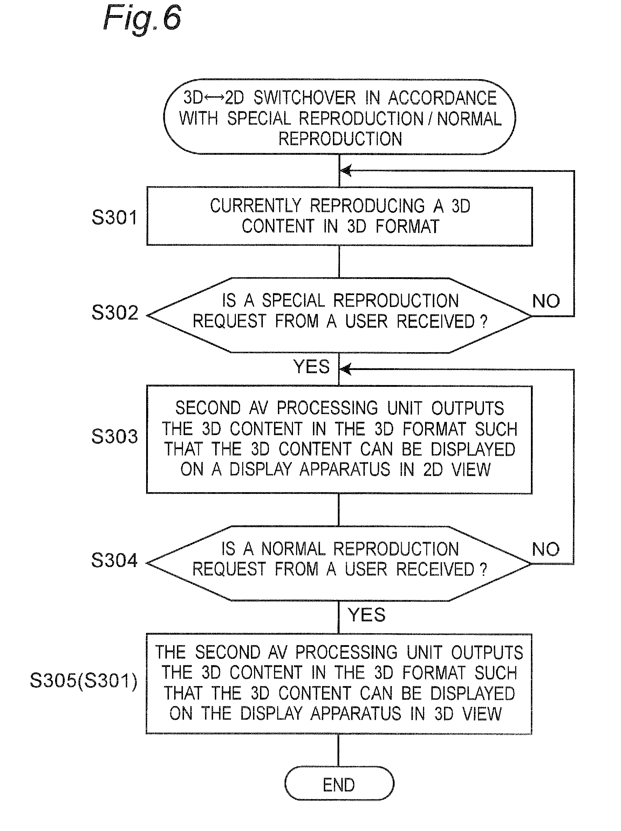

Fig. 6 is a flow chart illustrating an operation for automatically switching the image display of contents to the 2D display for performing special reproduction when the image reproducing apparatus 12 performs the special reproduction of contents including the 3D image stream signals while the contents are normally reproduced in the 3D display mode.

The image reproducing apparatus 12 generates the 3D image signal from the 3D image stream signal of the 3D contents, and outputs the generated 3D image signal in such a 3D format as the format @S101 illustrated in Fig. 5A. The image display apparatus 11 displays the 3D image based on the 3D image signal (S301). At this time, the mode of the HDMI interface between the second input/output unit 203 of the image reproducing apparatus 12 and the first input/output unit 101 of the image display apparatus 11 (format on the transmission path between the apparatuses) is the output mode for 3D image signal (3D format).

The image reproducing apparatus 12 determines whether an instruction for special reproduction is received from a user during the 3D image reproduction (S302). More specifically, the second remote control signal receiving unit 205 receives a signal transmitted from the remote controller and transmits the contents of the received signal to the CPU 204. The CPU 204 determines whether the received signal is the instruction for special reproduction.

Having determined that the instruction for special reproduction is received ("YES" in Step S302), the CPU 204 sends an instruction to the second AV processing unit 202 to generate such an image signal from the 3D image stream signal that can be outputted to the image display apparatus 11 in the 3D image output mode and displayed as a non-stereoscopic (2D) image on the image display apparatus 11, and sends the instruction for special reproduction of the contents (S209). The image signal may be generated in the step in such a format as the format @S203 illustrated in Fig. 5 in a manner similar to Step S203 according to the first embodiment.

In Step S303, the left eye images (L) are continuously transmitted in the format of the output mode for 3D image signal even at the time when the right eye image (R) should be transmitted so that the user's left and right eyes see the same image with no parallax therebetween. Then, the user recognizes the image currently in special reproduction displayed on the image display apparatus 11 as a non-3D (2D) image. Thus, the image reproducing apparatus 12 changes the image display from the 3D display to the 2D display when the instruction for special reproduction is received during the reproduction of the contents on the image display apparatus in the 3D display mode. As a result, the user's eye strain due to the special reproduction of the 3D image can be lessened.

After that, the image reproducing apparatus 12 determines whether an instruction for ordinary reproduction is received from the user during the special reproduction (S304). More specifically, the second remote control signal receiving unit 205 receives a signal transmitted from the remote controller manipulated by the user, and transmits the contents of the received signal to the CPU 204. The CPU 204 determines whether the received signal is the instruction for normal reproduction.

Having determined that the instruction for normal reproduction is received ("YES" in Step S304), the CPU 204 sends an instruction to the second AV processing unit 202 to generate such an image signal from the 3D image stream signal that can be outputted to the image display apparatus 11 in the 3D image output mode and displayed as a stereoscopic (3D) image on the image display apparatus 11, and sends the instruction for normal reproduction of the contents (S305). The image signal may be generated in the step in such a format as the format @S101 illustrated in Fig. 5 in a manner similar to Step S101 according to the first embodiment. In Step S305, the image reproducing apparatus 12 generates and outputs the image signal in a manner similar to Step S301 (S101).

The image reproducing apparatus 12 according to the second embodiment has the second AV processing unit 202, the second input/output unit 203, and the second remote control signal receiving unit 205. The second AV processing unit 202, second input/output unit 203, second remote control signal receiving unit 205 may be structurally and functionally equal to the second AV processing unit 202, second input/output unit 203, second remote control signal receiving unit 205 according to the first embodiment. In the case where the second remote control signal receiving unit 205 receives the instruction for special reproduction while the format on the transmission path between the apparatuses is authenticated in the stereoscopic (3D) image format, the second AV processing unit 202 according to the second embodiment can decode the image stream signal of the stereoscopic (3D) contents into the non-stereoscopic (2D) image signal which can be transmitted in the stereoscopic (3D) image format as the format on the transmission path between the apparatuses and displayed (recognized by a user) on the image display apparatus 11 as a non-stereoscopic (2D) image, and output the non-stereoscopic (2D) image signal.

In other words, the image reproducing apparatus 12 according to the second embodiment can output the 3D image signal and the non-3D (2D) image signal to the image display apparatus 11 using the format corresponding to the output mode for 3D image signal as the format on the transmission path between the image reproducing apparatus 12 and the image display apparatus 11 (HDMI interface mode). The image reproducing apparatus 12 can automatically switch to and from the output of the 3D image signal and the output of the non-3D (2D) image signal by following the instruction for normal reproduction or special reproduction received from the indicator such as the remote controller of the image reproducing apparatus 12. The image reproducing apparatus 12 can also switch to and from the output of the 3D image signal and the output of the non-3D (2D) image signal by following an instruction received from a device other than the remote controller of the image reproducing apparatus 12. For example, the image reproducing apparatus 12 can receive an instruction from the remote controller of the image display apparatus 11 through the image display apparatus 11 and the transmission path (HDMI interface) to switch to and from the output of the 3D image signal and the output of the non-3D (2D) image signal by following the instruction.

The image reproducing apparatus 12 according to the second embodiment is an image reproducing apparatus capable of outputting the 3D image signal which can display a stereoscopic image or the non-3D image signal which can display a non-stereoscopic image to the image display apparatus 11, the image reproducing apparatus 12 including: the second AV processing unit 202 operable to input therein data of the contents and generate the 3D image signal or the non-3D image signal from the inputted contents data; the second input/output unit 203 operable to output the 3D image signal or the non-3D image signal generated by the second AV processing unit 202 to the image display apparatus 11 in accordance with the 3D image output format which is the format for outputting the image signal for stereoscopic image display; and the second remote control signal receiving unit 205 being operable to receive the instruction inputted by the user, wherein, in the case where the second remote control signal receiving unit 205 receives the instruction for special reproduction of the contents when the second input/output unit 203 outputs the 3D image signal in accordance with the 3D image signal output format, the second AV processing unit 202 generates the non-3D image signal from the contents data, and the second input/output unit 203 outputs the generated non-3D image signal to the image display apparatus 11 in accordance with the 3D image output format.

To avoid a stress imposed on a user such as eye strain due to the special reproduction in the 3D image display, the image reproducing apparatus according to the present embodiment can automatically switch the display mode to the 2D display during the special reproduction, and can prevent interruption of images resulting from the HDMI interface re-authentication even after the user switches the normal reproduction of the 3D image to the special reproduction or from the special reproduction of the 3D image to the normal reproduction. Therefore, the user can enjoy the contents without interruption of images resulting from the HDMI interface re-authentication even after the normal reproduction of the 3D image is changed to the special reproduction, making it less likely that the user suffers eye strain.

### Third embodiment

An image reproducing apparatus according to a third embodiment is described below. The image reproducing apparatus according to the third embodiment is structurally and functionally equal to the image reproducing apparatus 12 according to the first or second embodiment. The image reproducing apparatus further performs the following operation when contents to be reproduced are switched from 3D contents to 2D contents.

In the case where broadcast waves are received and reproduced, contents (broadcast program) per se may be switched to and from 3D contents and 2D contents when a user switches a channel for reproduction using, for example, a remote controller.

The conventional image reproducing apparatus sometimes caused interruption of images resulting from the HDMI interface re-authentication in such an event as described above. The image reproducing apparatus according to the present embodiment can solve the conventional problem by avoiding the HDMI interface re-authentication even when the contents per se are switched to and from 3D to 2D so that an image can be smoothly reproduced.

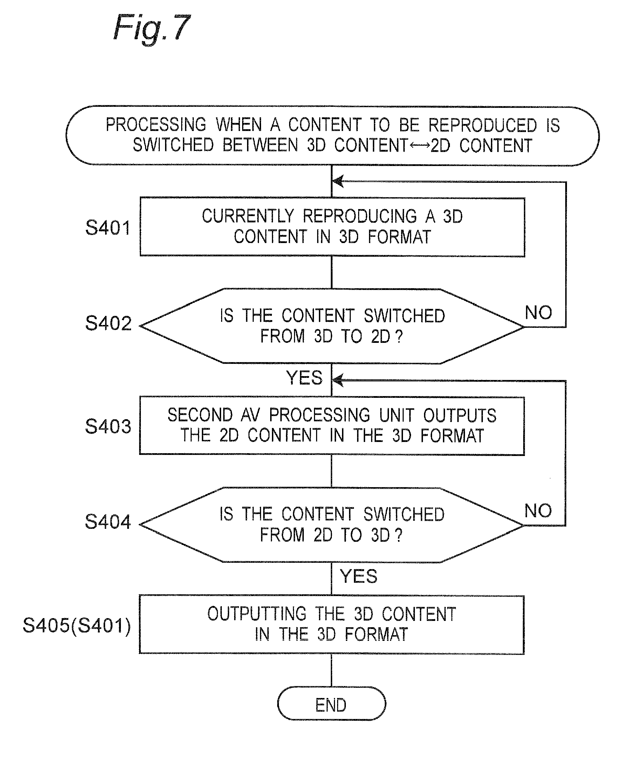

Fig. 7 is a flow chart illustrating an operation for reproducing a 2D broadcast program in the case where the program to be reproduced is switched to the 2D broadcast program when the image reproducing apparatus 12 receives and reproduces a received 3D broadcast program in 3D images. The operation is carried out when, for example, the user switches the channel for reproduction by using the remote controller.

The image reproducing apparatus 12 receives a 3D broadcast program (3D contents), generates a 3D image signal, and transmits the generated 3D image signal to the image display apparatus 11. The image display apparatus 11 displays a 3D image based on the 3D image signal (S401). In the described example, the image reproducing apparatus 12 receives the contents (program) by catching the broadcast wave. Therefore, the images displayed on the image display apparatus 11 are the contents (program) received via the antenna 206 and the tuner 207. At the time, the HDMI interface, which is the transmission path between the first input/output unit 101 of the image display apparatus 11. and the second input/output unit 203 of the image reproducing apparatus 12, is already authenticated in the output mode for 3D image signal.

An example of the output format of the image signal transmitted to the HDMI interface is the format @S101 illustrated in Fig. 5A. The format @S101 is such a format that transmits the right eye image (R) and the left eye image (L) in turn. The formats illustrated in Fig. 5 were described in the first embodiment, and will not be described again in detail.

Referring to Fig. 7, during the reproduction of the 3D broadcast program (3D contents), the image reproducing apparatus 12 determines whether an instruction to switch the contents (broadcast program) from the 3D broadcast program (3D contents) to the 2D broadcast program (2D contents) which is different to the current program or the program broadcasted by a different channel, is received from a user via the remote controller (S402).

The instruction determined in Step S402 is inputted to the image reproducing apparatus 12 via its remote controller in the foregoing description. The instruction may be inputted to the image reproducing apparatus 12 by using a device other than the remote controller, for example, the instruction may be inputted to the image reproducing apparatus 12 from the image display apparatus 11 by using the remote controller of the image display apparatus.

The CPU 204 instructs the tuner 207 to change the channel. At the time, it is necessary for the second. AV processing unit 202 to determine whether the program of the changed channel is the 3D broadcast program (3D contents) or the 2D broadcast program (2D contents (non 3D contents)). A method for determining the program is described below. Broadcast contents are broadcasted with identification information of its own contents as well as the contents data. The identification information of such contents includes information indicating whether the contents are 3D images (3D contents) or 2D images (2D contents). The second AV processing unit 202 determines whether the changed channel is 3D images (3D contents) or 2D images (2D contents) based on the identification information of the contents. Having determined that the changed channel is the 2D contents, the operation proceeds to Step S403.

The image reproducing apparatus 12 receives the instruction to change the channel or program from the user via the remote controller during the reproduction of the 3D broadcast program. When it is determined that the changed program is the 2D broadcast program (2D contents) ("YES" in Step S402), the CPU 204 instructs the second AV processing unit 202 to reproduce the 2D images (2D contents) (S403).

The second AV processing unit 202 converts the images of the 2D broadcast program (2D contents) into the format @S203 illustrated in Fig. 5B without changing the HDMI transmission format (still in the output mode for 3D image signal), and transmits them in the form of image signals to the image display apparatus 11.

The image reproducing apparatus 12 according to the third embodiment includes the second AV processing unit 202 and the second input/output unit 203. The second AV processing unit 202 and the second input/output unit 203 may be structurally and functionally equal to the second AV processing unit 202 and the second input/output unit 203 according to the first or second embodiment. The second AV processing unit 202 according to the third embodiment can determine whether the contents to be reproduced are the stereoscopic contents (3D contents) or the non-stereoscopic contents (2D contents). In the case where the contents to be reproduced are switched from the 3D contents to the 2D contents while the format on the transmission path between the apparatuses is authenticated in the stereoscopic (3D) image format, the second AV processing unit 202 according to the third embodiment can decode the image stream signal of the 2D contents into such a non-stereoscopic (2D) image signal that can be transmitted in the stereoscopic (3D) image format as the format on the transmission path between the apparatuses and displayed (recognized by a user) on the image display apparatus 11 as a non-stereoscopic (2D) image, and output the non-stereoscopic (2D) image signal.

In other words, the image reproducing apparatus 12 according to the third embodiment can determine whether the contents to be reproduced are the 3D contents or the 2D contents and output the 3D image signal of the 3D contents and the non-3D (2D) image signal of the 2D contents to the image display apparatus 11 using the format corresponding to the output mode for 3D image signal as the format on the transmission path between the image reproducing apparatus 12 and the image display apparatus 11 (HDMI interface mode). The image reproducing apparatus 12 can automatically switch to and from the output of the 3D image signal and the output of the non-3D (2D) image signal by determining whether the contents to be reproduced are the 3D contents or the 2D contents.

The image reproducing apparatus 12 according to the third embodiment is an image reproducing apparatus capable of outputting the 3D image signal which can display a stereoscopic image or the non-3D image signal which can display a non-stereoscopic image to the image display apparatus 11, the image reproducing apparatus 12 including: the second AV processing unit 202 operable to input therein data of the contents and generate the 3D image signal or the non-3D image signal from the inputted contents data; the second input/output unit 203 operable to output the 3D image signal or the non--3D image signal generated by the second AV processing unit 202 to the image display apparatus 11 in accordance with the 3D image output format which is the format for outputting the image signal for stereoscopic image display; and the second remote control signal receiving unit 205 operable to receive the instruction inputted by the user, wherein the second AV processing unit 202 determines whether the contents to be reproduced are the 3D contents or the non-3D contents from the identification information of the contents included in the contents data, and in the case where the second remote control signal receiving unit 205 receives the instruction to switch the contents to be reproduced from the current contents to another contents when the second input/output unit 203 outputs the 3D image signal in accordance with the 3D image output mode, and the second AV processing unit 202 determines that the another contents are the non-3D contents, the second AV processing unit 202 generates the non-3D image signal from data of the another contents, and then the second input/output unit 203 outputs the non-3D image signal to the image display apparatus 11 in accordance with the 3D image output mode.

In the image reproducing apparatus 12 according to the present embodiment, the image stream signal inputted to the second AV processing unit 202 may be an image stream signal of contents received from outside of the image reproducing apparatus 12. The contents are received along with the identification information of the contents indicating whether the contents are the stereoscopic contents (3D contents) or the non-stereoscopic contents (2D contents). The second AV processing unit 202 may receive the identification information of the contents as well as the image stream signal of the contents to determine whether the inputted contents are the stereoscopic contents (3D contents) or the non-stereoscopic contents (2D contents) in accordance with the received identification information of the contents.

The image reproducing apparatus 12 according to the present embodiment can prevent interruption of images resulting from the HDMI interface re-authentication even when the user instructs to change the 3D broadcast channel to the 2D broadcast channel using the remote controller while the user is watching the 3D broadcast program (3D contents) in 3D stereoscopic images. Therefore, even when the user stops watching the 3D broadcast program (3D contents) to switch to the 2D broadcast program (2D contents), the user can still enjoy the contents without interruption of images resulting from the HDMI interface re-authentication. The image reproducing apparatus 12 according to the present embodiment is also advantageous in the case where the program to be broadcasted is changed from the 3D broadcast program to 2D broadcast program on the same channel.

The third embodiment described the example in which the broadcasted program is received and reproduced. The image reproducing apparatus 12 can carry out a similar operation when contents recorded in a recording medium are reproduced. The image reproducing apparatus 12 may determine whether the contents to be reproduced based on the contents identification information recorded in the disc 200 are the 3D contents or the 2D contents. In the image reproducing apparatus 12 according to the third embodiment, the contents inputted to the second AV processing unit 202 may be the contents recorded in the recording medium, and the identification information of the contents, which indicates whether the contents are the stereoscopic contents (3D contents) or the non-stereoscopic contents (2D contents), may be stored as well in the recording medium. Accordingly, the second AV processing unit 202 receives the contents inputted thereto and the identification information of the inputted contents to determine whether the inputted contents are the stereoscopic contents (3D contents) or the non-stereoscopic contents (2D contents) based on the identification information of the contents.

In the example, even in the case where the image reproducing apparatus 12 receives the instruction to switch the contents to be reproduced from the 3D contents to another contents (2D contents) stored in the recording medium from the remote controller when the image reproducing apparatus 12 reproduces the 3D contents recorded in the recording medium in 3D stereoscopic images, the image reproducing apparatus 12 can prevent interruption of images resulting from the HDMI interface re-authentication. Therefore, the user can enjoy the contents without interruption of images resulting from the HDMI interface re-authentication even after he switches the contents to be watched from the 3D contents to the 2D contents.

### Fourth embodiment

In the example of the contents switchover between 3D and 2D described in the embodiments, the contents are switched from 3D to 2D by the user's instruction to change the channel. However, the present embodiments are not limited to the described example. In another example, an instruction to reproduce data broadcast is received from a user during the reproduction of 3D contents.

The data broadcast is included in an image stream signal channel-selected by the tuner 207. The second AV processing unit 202 generates an image signal to be displayed as the data broadcast from the received image stream signal. The second input/output unit 203 outputs the generated image signal. In general, the data broadcast is often the 2D contents. The image signal to be transmitted by the second input/output unit 203 to the image display apparatus 11 when the currently reproduced 3D contents are displayed along with the data broadcast which is the 2D contents is a 2D image signal. It is necessary in that case for the conventional image reproducing apparatus to re-authenticate its output unit. In the image reproducing apparatus 12 according to the present embodiment, the second input/output unit 203 can output the 2D contents in the 3D format (format @S203 illustrated in Fig. 5B) without re-authenticating the HDMI interface even when the instruction to output the data broadcast which is the 2D contents is received during the reproduction of the 3D contents.

An image reproducing apparatus 12 according to a fourth embodiment is an image reproducing apparatus capable of outputting the 3D image signal which can display a stereoscopic image or the non-3D image signal which can display a non-stereoscopic image to the image display apparatus 11, the image reproducing apparatus 12 including: the second AV processing unit 202 operable to input therein data of the contents and generate the 3D image signal or the non-3D image signal from the inputted contents data; the second input/output unit 203 operable to output the 3D image signal or the non-3D image signal generated by the second AV processing unit 202 to the image display apparatus 11 in accordance with the 3D image output format which is the format for outputting the image signal for stereoscopic image display; and the second remote control signal receiving unit 205 operable to receive the instruction inputted by the user, wherein the second AV processing unit 202 determines whether the contents are the 3D contents or the non-3D contents from the identification information of the contents included in the contents data, and in the case where the second remote control signal receiving unit 205 receives the instruction to switch the contents to be reproduced from the current contents to the data broadcast including another contents which are the non-3D contents when the second input/output unit 203 outputs the 3D image signal in accordance with the 3D image output mode, and the second AV processing unit 202 determines that the another contents are the non-3D contents, the second AV processing unit 202 generates the non-3D image signal from data of the another contents, and the second input/output unit 203 outputs the non-3D image signal to the image display apparatus 11 in accordance with the 3D image output mode.

The image reproducing apparatus 12 may carry out the following operation to prevent interruption of images resulting from the HDMI interface re-authentication. To output the contents to be reproduced, the second input/output unit 203 outputs the contents in the 2D format (format of the output mode for 2D image signal), and superposes flag information indicating whether the contents are the 2D contents or 3D contents on the contents before outputting them (or outputs the contents without superposing flag information indicating 3D thereon). When the contents to be outputted are the 2D contents, the image reproducing apparatus 12 outputs the image signal of the 2D contents in the 2D format, and superposes the flag information indicating the outputted contents are the 2D contents on the image signal before outputting it (or outputs the image signal without superposing the flag information indicating 3D thereon). When the contents to be outputted are the 3D contents, the image reproducing apparatus 12 outputs the image signal of the 3D contents in the 2D format (format of the output mode for 2D image signal), and superposes the flag information indicating the outputted contents are the 3D contents on the image signal before outputting it.

Then, the image display apparatus 11 simply checks whether the flag information indicating the 2D contents is superposed on the image signal (or the flag information indicating the 3D contents is not superposed thereon) when the image signal is received in the 2D format (format of the output mode for 2D image signal). When, for example, the image display apparatus 11 detects that the flag information indicating the 2D contents is superposed on the image signal (or the flag information indicating the 3D contents is not superposed thereon), the image display apparatus 11 displays the 2D image based on the image signal. Thus, the image display apparatus 11 can display the contents as the 2D contents. When the image display apparatus 11 detects that the flag information indicating the 3D contents is superposed on the image signal, the image display apparatus 11 separately extracts the left eye image and the right eye image from the image signal transmitted in the 2D format (format of the output mode for 2D image signal) and scales the extracted images in a suitable angle of view. Then, the image display apparatus 11 displays the left eye image (L) and the right eye image (R) in turn in accordance with any conventional display method in 3D image display. Specific examples of the method for outputting the 3D contents in the 2D format (format of the output mode for 2D image signal) are side-by-side method, top- and-top method, and line-by-line method.

The image reproducing apparatus 12 according to the fourth embodiment is an image reproducing apparatus capable of outputting the 3D image signal which can display a stereoscopic image or the non-3D image signal which can display a non-stereoscopic image to the image display apparatus 11, the image reproducing apparatus 12 including: the second AV processing unit 202 operable to input therein contents data and generate the 3D image signal on which the information indicating a stereoscopic image is superposed thereon or the non-3D image signal on which the information indicating a stereoscopic image is not superposed thereon from the inputted contents data; the second input/output unit 203 operable to output the 3D image signal or the non-3D image signal generated by the second AV processing unit 202 to the image display apparatus 11 in accordance with the non-3D image output format which is the format for outputting the image signal for non-stereoscopic image display; and the second remote control signal receiving unit 205 operable to receive the instruction inputted by the user, wherein the second AV processing unit 202: 1) determines whether the contents are the 3D contents or the non-3D contents from the identification information of the contents included in the contents data, 2) generates the 3D image signal from the contents data in accordance with the non-3D image output format when the contents are determined as the 3D contents, and 3) generates the non-3D image signal from the contents data in accordance with the non-3D image output format when the contents are determined as the non-3D contents. In the case where the second remote control signal receiving unit 205 receives the instruction to switch the contents to be reproduced from the current contents to another contents and the second AV processing unit 202 determines that the another contents are the 3D contents when the second input/output unit 203 is outputting the non-3D image signal in the non-3D image output mode, and the second AV processing unit 202 determines the another content as the 3D contents, the second AV processing unit 202 generates the 3D image signal from the another contents data, and the second input/output unit 203 outputs the generated 3D image signal to the image display apparatus 11 in accordance with the non-3D image output format.

As described so far, the image reproducing apparatus 12 according to the present embodiment retains the 2D format (format of the output mode for 2D image signal) as the output format of the image signal outputted from the second input/output unit 203, and superposes the flag information indicating whether the contents are the 3D contents data or the 2D contents on the image signal and outputs the resulting image signal. This enables the image reproducing apparatus 12 to display the image on the image display apparatus 11 without re-authentication even when the switchover between the 2D contents and the 3D contents takes place, and thus prevents interruption of images resulting from re-authentication. The present embodiment is particularly advantageous when the contents to be displayed are switched to and from the 3D contents and the 2D data broadcast.

### Detail of Second AV Processing Unit according to the first to fourth embodiments

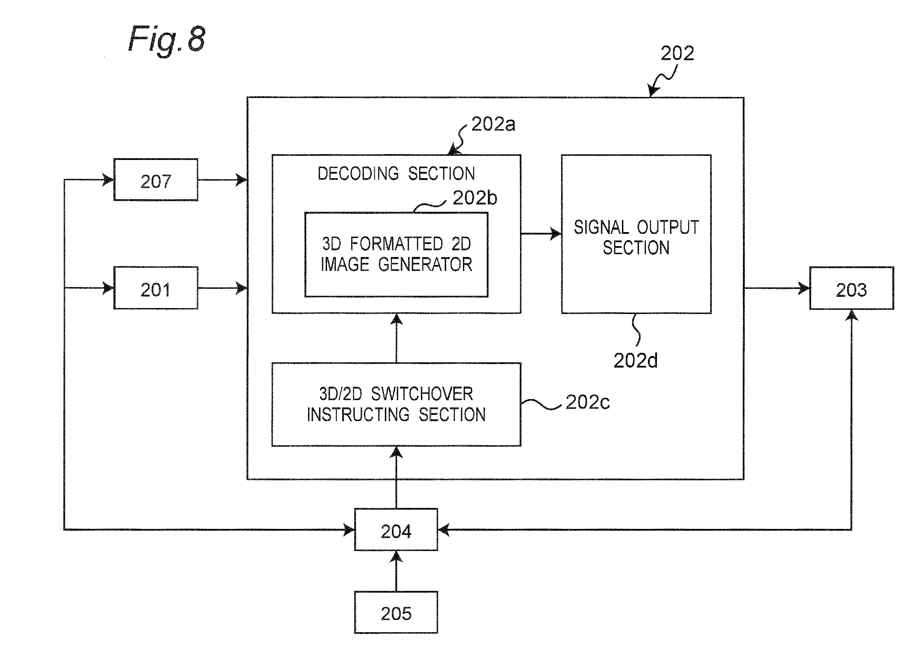

Fig. 8 is a block diagram illustrating a detailed structure of the second AV processing unit 202 provided in the image reproducing apparatuses 12 according to the first to fourth embodiments. A single or plural semiconductor devices, for example, may constitute the second AV processing unit 202. The second AV processing unit 202 has a decoding section 202a operable to generate the image signal from the image stream signal including the 3D contents inputted from the disc 200 or the tuner 207, a signal output section 202d operable to output the image signal inputted from the decoding section 202a to the second input/output unit 203, and a 3D/2D display switchover instructing section 202c operable to receive the instruction to switch contents to be displayed to and from 3D and 2D. The decoding section 202a includes a 3D format 2D image generator 202b, wherein the 3D format 2D image generator 202b, to output the 2D image signal in the output mode for 3D image signal, generates an image signal repeatedly including only one of the left eye image and the right eye image paired therewith as the left eye image and the right eye image paired therewith of the 3D image signal. The signal output section 202d may be an output terminal.

Based on the instruction transmitted from the remote controller of the image reproducing apparatus inputted by way of the second remote control signal receiving unit 205, instruction transmitted from the remote controller of the image display apparatus inputted by way of the image display apparatus 11 and the second input/output unit 203, and identification information of the contents transmitted from the tuner 207 or the disc drive unit 201, the CPU 204 can transmit an instruction to generate the image signal for 3D display (for example, image signal in the format @S101 illustrated in Fig. 5) or generate the image signal for non-3D (3D) display (for example, image signal in the format @S203 illustrated in Fig. 5) from the image data of the contents to the 3D/2D display switchover instructing section 202c.

The 3D/2D display switchover instructing section 202c which received the instruction from the CPU 204 can control the decoding section 202a and the 3D format 2D image generator 202b provided therein in accordance with the received instruction.

The second AV processing unit 202 of the image reproducing apparatuses 12 according to the first to fourth embodiments may be a semiconductor device including: the decoding section 202a operable to input therein the contents data and generate the 3D image signal which can display a stereoscopic image or the non-3D image signal which can display a non-stereoscopic image from the inputted contents data, the 3D/2D display switchover instructing section 202c operable to receive the instruction indicating the image display of the contents and instruct the decoding section 202a whether the 3D image signal or the non-3D image signal is generated based on the received instruction, and a signal output section 202d operable to output the image signal generated by the decoding section 202a in accordance with the 3D image output format which is the format for outputting the image signal for stereoscopic image display.

### Fifth embodiment

An image reproducing apparatus according to a fifth embodiment is described below.

### Problem to be Handled by the Image Reproducing Apparatus according to the Present Embodiment

First, an operation of the image reproducing apparatus when the disc 200 in which the 3D contents are recorded is reproduced is briefly described below. In the disc 200, left eye image data (L) and right eye image data (R) are recorded as the image data for 3D reproduction. The image reproducing apparatus 12 reproduces these data to output a left eye image signal (L) and a right eye image signal (R) to the image display apparatus 11. The image display apparatus 11, for example, outputs images of the left eye image signal (L) and the right eye image signal (R) in turn at time intervals. The stereoscopic glasses 13 drive the shutter on left and right in turn in synchronization with the L and R images so that a user can view the contents as a stereoscopic image.

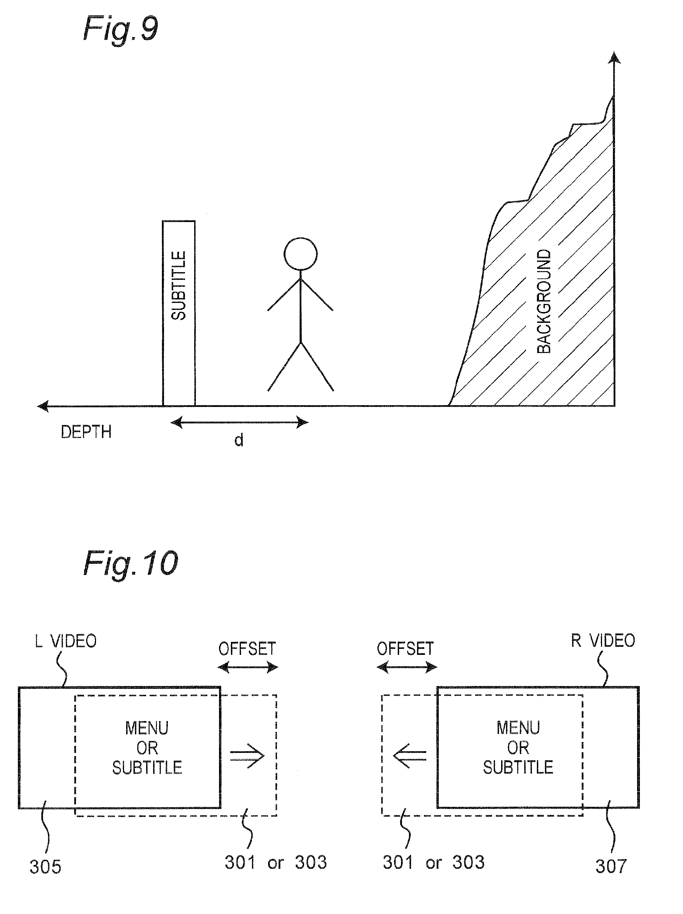

In the case where additional information, such as menu graphic or subtitle data, is superposed on the contents to be 3D-displayed, it is necessary to adjust the depth of the menu graphics or the subtitle data depending on the stereoscopic volume (hereinafter, called depth) of images (for example, main footage of the contents), which is described below referring to Fig. 9. The additional information of the menu graphics may be included in the contents data as graphics data, and the additional information of the subtitle data may be included in the contents data as text data.

Fig. 9 is an edge-on view of a 3D image rendering in which a stereoscopic view recognized by a user is expressed in lateral directions on the drawing (hereinafter, may be called "depth") when the user views the 3D image. The 3D image of the drawing has a background, a person is standing on the near side of the background (side closer to the user), and the subtitle data is superposed on the nearer side (side even closer to the user). A difference between the depths of the person and the subtitle data is called d.

Assuming that the person moves front and back in the direction of a screen in the 3D image (lateral directions on the drawing, in other words, in the directions where the depth value changes), the depth difference d is subject to a large variation as the person moves front and back when the 3D image is displayed with the depth value of the subtitle data fixed to a value.

As the depth difference d is increased when the 3D contents are viewed in 3D images, the user tries to focus on the two objects, the subtitle and the person, often failing to focus thereon. As a result, the user may undergo eye strain. Therefore, it is necessary to adjust an amount of offset of the menu graphics or the subtitle data so that the depth difference d is fixed to a fixed value.

Fig. 10 is a descriptive illustration of an offset of additional information such as menu graphics 301 and subtitle data 303. The offset illustrated in the drawing represents an amount of shift additionally generated when the menu graphic 301 / subtitle data 303 on L side is superposed on a video image (L video 305) on L side. The amount of shift is equal to an amount of shift additionally generated when the menu graphic 301 / subtitle data 303 on R side is superposed on a video image (R video 307) on R side. When the offset is equally imparted to the L and R sides both, a perspective direction, in other words, depth, in the 3D image of the menu graphics 301 / subtitle data 303 can be adjusted. Thus, the menu graphics 301 or the subtitle data 303 (first image) is superposed on the video image on L/R side (second image) with a positional shift equal to the offset.

To keep the depth difference between the subtitle and the person constant, the value of offset (amount of offset) should be varied over time along with the front and back movement of the person in the 3D image (in the depth direction illustrated in the drawing). More specifically, when the amount of offset is preset to vary over time in synchronization with the video image, the depth difference d illustrated in Fig. 9 can be substantially constant all the time. This helps the user to more easily focus on the object looking at the 3D image on which the menu or the subtitle is superposed, thereby largely easing the eye strain

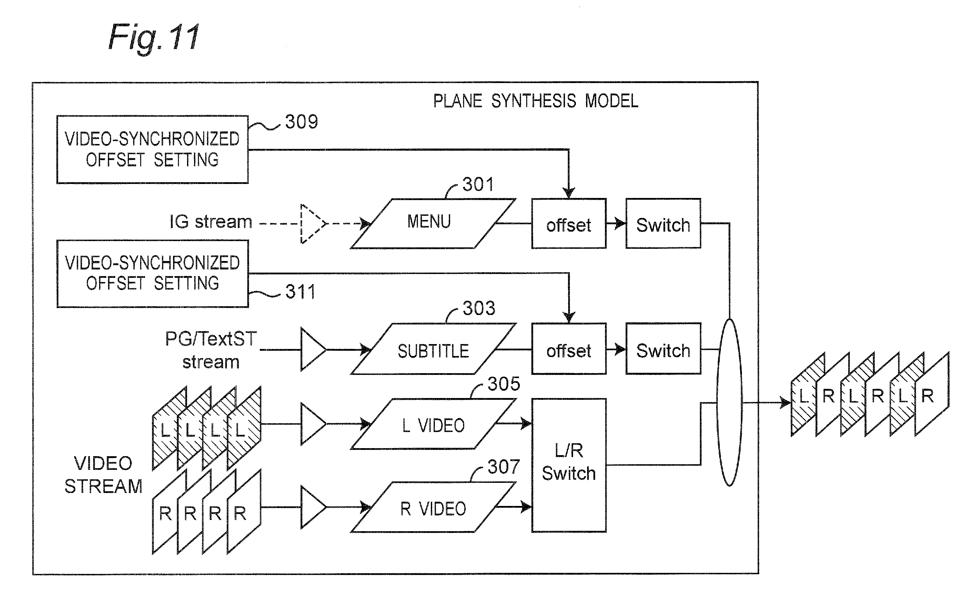

Referring to Fig. 11, a description is given to an output from the image reproducing apparatus 12 when the additional information such as the menu graphics 301 or the subtitle data 303 is superposed on the video image (305, 307). Fig. 11 is an illustration of a method of superposing the menu graphics 301 or the subtitle data 303 in, for example, the production of a 3D image on a blue ray disc. IG Stream illustrated in the drawing is conventionally stream data of the menu graphics 301 (first image) superposed on the image 305, 307 (second image) (of, for example, the main footage), and PG Stream is stream data of the subtitle (or graphic animation) 303 superposed on the image 305, 307 (of, for example, the main footage). The image reproducing apparatus 12 superposes the menu graphics 301 and/or the subtitle data 303 on the 3D video image data (L video 305 and R video 307) with a positional shift equal to the value of offset, and then outputs the resulting 3D video image data as L data and R data. The value of offset has a suitable value which changes on time axis depending on the stereoscopic volume (depth) of the video image, which is recorded on the disc as offset information, for example, the value of offset may be embedded in the stream or recorded as management information on the disc.

When the 3D display is switched to the 2D display on the image display apparatus 11 (for example, 3D television) by a user's switching operation, for example, between the image reproducing apparatus 12 and the image display apparatus 11 according to any of the embodiments described so far, the image display apparatus 11 displays a moving image including only one of the L video image and the R video image (for example, L video image). For example, a moving image including "L odd" and "L even" alone of the image signal transmitted in the format @S101 illustrated in Fig. 5 is displayed, or a moving image including "L odd'° and "L even" alone of the image signal transmitted in the format @S203 illustrated in Fig. 5 is displayed. In such a case, the user still unavoidably watches the L-side image (L video) on which the menu graphics or the subtitle data fluctuating right and left depending on the amount of offset is superposed because the value of offset of Fig. 10 varies over time as described earlier.

To solve the problem, the image reproducing apparatus 12 according to the present embodiment fixes the amount of offset in the menu graphics or the subtitle data to a fixed value when outputting the image signal for 2D image display in the format of the output mode for 3D image signal (format @S101 or format @S203 illustrated in Fig. 5). By fixing the amount of offset, the image reproducing apparatus 12 prevents the fluctuation of the displayed menu graphics or subtitle data when outputting the image signal for 2D (non-3D) image display in the format of the output mode for 3D image signal (format @S101 or format @S203 illustrated in Fig. 5). The image reproducing apparatus 12 according to the present embodiment can smoothly switch to and from the 3D image display and the 2D (non-3D) image display in a manner similar to the image reproducing apparatuses 12 according to the embodiments described earlier, thereby preventing the fluctuation of the displayed menu graphics and subtitle data to display a viewer-friendly image.

### 1. Structure of 3D Image Reproduction Display System

Hereinafter, the present embodiment is described. The image reproducing apparatus and the image display apparatus (3D image reproduction and display system) are structurally almost the same as those described in the embodiments. Therefore, description of the structural characteristics may be partly omitted.

The first input/output unit 101 of the image display apparatus 11 illustrated in Fig. 2 may be an HDMI interface in the present embodiment. The interface according to the present embodiment is the HDMI interface, however, the HDMI is just an example. The present embodiment is not necessarily limited to the HDMI interface, and an interface of any other type may be used. The first input/output unit 101 outputs the image signal inputted from the image reproducing apparatus 12 to the first AV processing unit 102. The first AV processing unit 102 outputs the image signal in accordance with the image display mode (2D (non-3D) display mode or 3D display mode) selected by a user and received by the first remote control signal receiving unit 104. The display unit 103 displays the image based on the image signal outputted from the first AV processing unit 102.

The first remote control signal receiving unit 104 receives an instruction inputted by the user for image display apparatus 11 including switchover of the image display mode of the image display apparatus 11 in the form of a signal sent from the remote controller, and notifies the first AV processing unit 102 of the instruction. The transmitting unit 105 transmits a timing signal for opening and closing the shutter of the stereoscopic glasses (specially designed glasses) 13.

In the case where the 3D image signal is inputted from the image display apparatus 11 by way of the first input/output unit 101, and the first remote control signal receiving unit 104 receives an instruction to display the image in the 3D display mode as the image display mode, the first AV processing unit 102 outputs the L-side and R-side image signals in turns to the display unit 103 so as to display the image in the 3D display mode. The first AV processing unit 102 outputs a timing signal for switching to and from the L and R sides to the transmitting unit 105.

When the image display apparatus 11 receives an instruction to switch the image display mode from the 3D display mode to the 2D display mode by the user's operation of the remote controller of the image display apparatus, the first remote control signal receiving unit 104 outputs an instruction to switch the image display mode to the 2D display mode to the first AV processing unit 102. To display the image in the 2D display mode, the first AV processing unit 102 outputs the L-side image signal alone included in the L and R image data of the 3D image signal inputted from the image reproducing apparatus 12 by way of the first input/output unit 101 to the display unit 103. As a result, the 2D image is apparently displayed on the display unit 103 because the L-side image alone is displayed on the display unit 103.

The first AV processing unit 102 can notify the image reproducing apparatus 12 by way of the first input/output unit 101. of a status indicating that the image is displayed in the 2D display mode as the image display mode. The status can be notified by means of, for example, CEC of HDMI (Consumer Electronics Control).

When the first remote control signal receiving unit 104 receives an instruction to switch the image display mode to the 3D display mode, the first AV processing unit 102 outputs the image signal by using the L and R image signals both in the 3D image signal inputted from the first input/output unit 101 to the display unit 103. The first AV processing unit 102 then notifies the image reproducing apparatus 12 by way of the first input/output unit 101 of the status indicating that the image is displayed in the 3D display mode as the image display mode.

The disc drive unit (drive device) 201 of the image reproducing apparatus 12 illustrated in Fig. 3 includes, for example, an optical drive to read data of contents from a disc such as DVD or BD. The second AV processing unit 202 generates the image signal from the image data read from the drive device 201 and outputs the generated image signal in the output mode described earlier. The second input/output unit 203 may be connected to the image display apparatus 11 through HDMI. The second remote control signal receiving unit 205 receives an instruction from the user for reproduction via the remote controller of the image reproducing apparatus.

### 2. Operation

### 2.1 Authentication

The authentication carried out by the image reproducing apparatus 12 thus constituted is described below. When a disc in which 3D contents are recorded is inserted into the disc drive unit (drive device) 201, the second AV processing unit 202 determines that the 3D contents are included in the disc, reads left eye (L) image data and right eye (R) image data from the disc, and reproduces the read image data (generates image signals). The reproduced image data (image signal) is transmitted to the second input/output unit 203, and mutual authentication for 3D connection is performed for the HDMI connection between the image reproducing apparatus 12 and the image display apparatus 11. The image display apparatus 11 then displays the image in the 3D display mode as the image display mode. When the second AV processing unit 202 determines that the 2D contents are recorded in the disc inserted into the disc drive unit (drive device) 201, mutual authentication for 2D connection is performed for the HDMI connection between the image reproducing apparatus 12 and the image display apparatus 11. The image display apparatus 11 then displays the image in the 2D display mode as the image display mode.

### 2.2 Reproduction When Image Display Mode is Changed

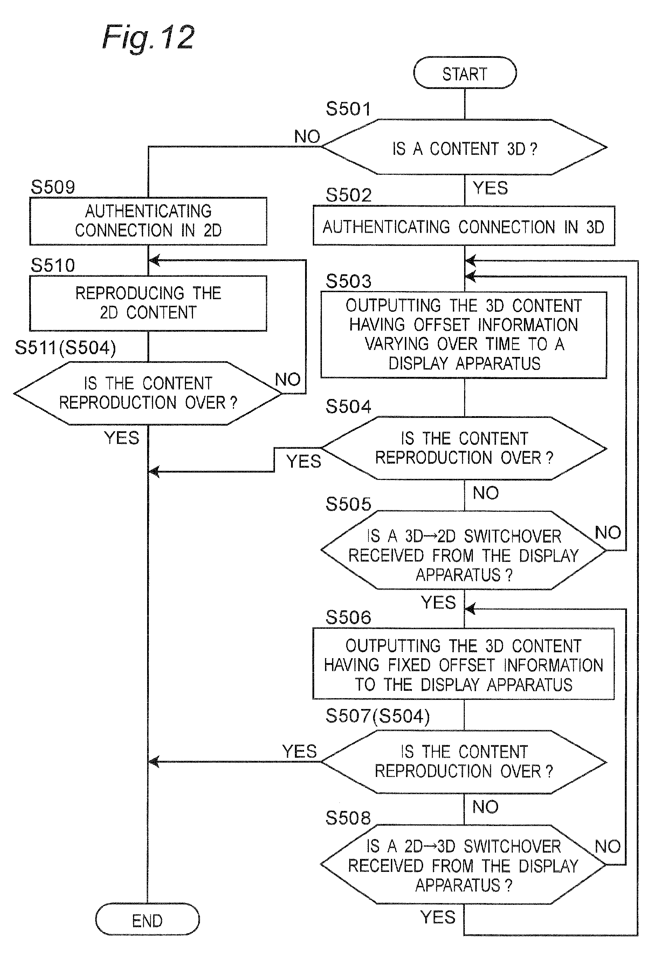

Below is described the change of the image display mode during the reproduction of contents carried out by the image reproducing apparatus 12 thus constituted referring to Fig. 12. Fig. 12 illustrates processing steps in the image reproducing apparatus 12 when a disc in which contents are recorded is inserted into the disc drive unit 201 of the image reproducing apparatus 12 and the image display mode of the image display apparatus 11 is changed to the 2D display mode during the reproduction of the contents (3D contents).

The second AV processing unit 202 of the image reproducing apparatus 12 determines whether the contents to be reproduced of the disc inserted in the disc drive unit 201 are 2D contents or 3D contents (S501). The 3D contents in the description denote contents including information necessary for displaying the 3D image on the image display apparatus 11. The 2D contents denote contents not including information necessary for displaying the 3D image on the image display apparatus 11. As a concrete determination method, described is a flag indicating whether the contents recorded in the management information on the disc are 2D contents or 3D contents, the image reproducing apparatus 12 may read the flag and determine whether the contents are 2D contents or 3D contents.

Having determined that the contents are 2D contents ("NO" in Step S501), the image reproducing apparatus 12 authenticates the connection in the output mode for 2D image signal in the HDMI interface which is the image signal transmission path between the image reproducing apparatus 12 and the image display apparatus 11 (S509), and reproduces the 2D contents (outputs the 2D image signal) (S510).

Having determined that the contents are 3D contents ("YES" in Step S501), the image reproducing apparatus 12 authenticates the connection in the output mode for 3D image signal (S502).

Next, the image reproducing apparatus 12 reads the 3D contents recorded in the disc inserted in the disc drive unit 201, and 3D-reproduces the read contents (outputs the 3D image signal) (S503). The image reproducing apparatus 12 outputs the 3D image signal for displaying the contents in 3D to the image display apparatus 11.

The image display apparatus 11 displays the image signal of the received contents in the 3D display mode. In the image signal outputted from the second AV processing unit 202 of the image reproducing apparatus 12, the additional information such as the menu graphics 301 or the subtitle data 303 is superposed on the video image with the offset additionally imparted thereto based on data of the value of offset variable over time in synchronization with the video image data of the read contents. When the offset is thus imparted, as described earlier, the depth difference between the object included in the 3D video image and the additional information superposed thereon is less variable, easing the user's eye strain.

Then, the image reproducing apparatus 12 determines whether the contents currently reproduced end (S504).

When the user manipulates the remote controller of the image display apparatus to send an instruction to change the image display mode from the 3D display mode to the 2D display mode to the image display apparatus 11, the image reproducing apparatus 12 can receive information of the instruction from the image display apparatus 11 through the HDMI interface. It is unnecessary to perform re-authentication at the time to change the HDMI connection mode. On the HDMI, the image reproducing apparatus 12 and the image display apparatus 11 are always connected to each other in the output mode for 3D image signal.

When the reproduction of the contents is not over yet, the image reproducing apparatus 12 determines whether a notice indicating that the image display mode is changed from the 3D display mode to the 2D display mode is received from the image display apparatus 11 (S505).

When the image reproducing apparatus 12 determines that the notice was received from the image display apparatus 11 ("YES" in Step S505), the second AV processing unit 202 of the image reproducing apparatus 12 outputs the image signal after the amount of offset of the additional information is fixed to a given value to prevent it from varying over time (S506). Accordingly the additional information such as the menu graphics 301 or the subtitle data 303 is displayed at a fixed position on the screen when the image is displayed on the image display apparatus 11 in the 2D display mode.

Then, the image reproducing apparatus 12 determines whether the contents currently reproduced are over or not (S507).

When the user manipulates the remote controller of the image display apparatus to send an instruction to switch the image display mode from the 2D display mode to the 3D display mode to the image display apparatus 11, the image reproducing apparatus 12 can receive information of the instruction from the image display apparatus 11 through the HDMI interface.

When the contents currently reproduce is not over yet, the image reproducing apparatus 12 determines whether a notice indicating that the image display mode is switched from the 2D display mode back to the 3D display mode is received from the image display apparatus 11 (S508).

When the image reproducing apparatus 12 determines that the notice was not received from the image display apparatus 11 ("NO" in Step S508), the image reproducing apparatus 12 implements the processing step of S506. It is unnecessary to perform re-authentication at the time to change the HDMI connection mode.

When it is determined that the notice indicating that the image display mode of the image display apparatus 11 is switched to the 3D display mode was received, in other words, it is detected that the image display mode of the image display apparatus 11 is switched back to the 3D display mode, the image reproducing apparatus 12 returns to the processing step of S503 to change the value of offset (amount of offset) when the additional information such as the menu graphics 301 or the subtitle data 303 is superposed on the video image, which is currently the fixed value, to a value variable over time in synchronization with the video image.

In the present embodiment, the image reproducing apparatus 12 repeats the processing steps described so far to switch the value of offset (amount of offset) when the additional information such as the menu graphics 301 or the subtitle data 303 is superposed on the video image to and from the fixed value and the value variable over time in synchronization with the video image in response to the instruction to switch the image display mode between the 2D display mode and the 3D display mode inputted from the remote controller of the image display apparatus 11. Accordingly, the present embodiment makes it unnecessary to perform re-authentication of the HDMI interface when the image display mode of the 3D contents switches between the 2D display mode and the 3D display mode. Therefore, the image display mode can be smoothly changed, and the amount of offset of the additional information is switched between the value variable over time and the fixed given value. As a result, the additional information of the 3D contents displayed in the 2D display mode is prevented from fluctuating.

As described so far, even after the image display mode of the image display apparatus 11 is switched from the 3D display mode to the 2D display mode, the image reproducing apparatus 12 detects the display mode of the image display apparatus 11, and fixes the amount of offset of the additional information such as the menu graphics 301 or the subtitle data 303 to a constant given value invariable over time. This avoids such an unfavorable event that the additional information superposed on the image (for example, of the main footage) fluctuates laterally in the 2D display. Even when the image display mode of the image display apparatus 11 is switched from the 3D display mode to the 2D display mode, it is unnecessary to re-authenticate the HDMI, problems generated on the screen such as synchronization fail, blackout and freeze are prevented from happening, and the image display can be smoothly and swiftly switched between the 2D display and the 3D display.

The image reproducing apparatus 12 according to the present embodiment includes the second AV processing unit 202, and the second input/output unit 203. The second AV processing unit 202 and the second input/output unit 203 may be structurally and functionally equal to the second AV processing unit 202 and the second input/output unit 203 according to any of the first to fourth embodiments. The second AV processing unit 202 according to the present embodiment can receive the offset information indicating the amount of offset that varies over time in synchronization with the 3D contents to be reproduced, and superpose the additional information (first image) on the 3D video image (second image) with the amount of offset added thereto, and then output the resulting image in the form of the 3D image signal. The second input/output unit 203 according to the present embodiment can receive the information indicating whether the image display mode of the image display apparatus 11 is set to the 3D display mode or the 2D display mode. When the second AV processing unit 202 detects that the image display mode of the image display apparatus 11 received by the second input/output unit 203 is set to the 2D display mode, the second AV processing unit 202 fixes the amount of offset to be imparted to the additional information (first image) superposed on the 3D video image to a constant given value and then superposes the resulting additional information on the 3D video image (second image), and outputs the resulting image in the form of the 3D image signal even though the offset information varies over time in synchronization with the 3D contents.

In other words, the image reproducing apparatus 12 according to the present embodiment, in a manner similar to the image reproducing apparatuses 12 according to the embodiments described earlier, can output the image signal for 3D display (for example, image signal in the format @S101 of Fig. 5) and the image signal for non-3D (2D) display ((for example, image signal in the format @S203 of Fig. 5) to the image display apparatus 11 using the format suitable for the output mode for 3D image signal as the format of the transmission path between the image reproducing apparatus 12 and the image display apparatus 11 (HDMI interface mode) . The image reproducing apparatus 12 according to the present embodiment can superpose the additional information on the 3D video image by setting the amount of offset of the additional information for the 3D video image to a value variable over time to generate the image signal for 3D display. Further, the image reproducing apparatus 12 according to the present embodiment can superpose the additional information on the 3D video image by setting the amount of offset of the additional information for the 3D video image to a constant given value invariable over time to generate the image signal for non-3D (2D) display.

The image reproducing apparatus 12 according to the fifth embodiment is an image reproducing apparatus capable of outputting the 3D image signal which can display a stereoscopic image or the non-3D image signal which can display a non-stereoscopic image to the image display apparatus 11, the image reproducing apparatus 12 including: the second AV processing unit 202 operable to input therein the contents data and generate the image signal of the contents by superposing the first image of the contents on the second image of the contents in a positionally adjusted manner based on the amount of offset which depends on the offset information included in the contents; the second input/output unit 203 operable to output the image signal generated by the second AV processing unit 202 to the image display apparatus 11 in accordance with the 3D image output format which is the format for outputting the image signal for stereoscopic image display; and the second input/output unit 203 operable to receive the information indicating whether the image of the contents is displayed in 3D or displayed in non-3D. In the case where then second input/output unit 203 receives the instruction to display the image of the contents in non-3D when the second input/output unit 203 outputs image signal on which the first image is superposed in accordance with the 3D image output format, the second AV processing unit 202 fixes the amount of offset to a constant given value invariable over time, and superposes the first image on the second image in a positionally adjusted manner based on the fixed amount of offset to generate the image signal. The second input/output unit 203 outputs the generated image signal to the image display apparatus in accordance with the 3D image output mode.

In the case where mutual authentication is necessary when the image signal to be delivered between the second input/output unit 203 of the image reproducing apparatus 12 according to the present embodiment and the image display apparatus 11 is changed from the 3D image signal to the non-3D (2D) image signal or from the non-3D (2D) image signal to the 3D image signal, when the image reproducing apparatus 12 detects that the image display mode of the image display apparatus 11 is set to display the 2D image (2D display mode), the second input/output 203 continues to output the stereoscopic image (3D image signal) to the image display apparatus 11 without authentication, and the second AV processing unit 202 generates the image signal by fixing the offset information of the additional information to be superposed to a constant given value invariable over time and superposing the resulting additional information on the video image, and then outputs the generated image signal.

The present embodiment described how to control the amount of offset when the additional information is superposed on the image. In the present embodiment, however, in a manner similar to the embodiments described earlier, the image reproducing apparatus 12 may change the format of the 3D image signal between the format @S101 and the format @S203 illustrated in Fig. 5 in response to the instruction to switch to and from the 3D display and the non-3D display of the 3D contents.

In the present embodiment, the image reproducing apparatus 12 can receive the instruction to switch between the 3D display and the non-3D display directly from its own remote controller in a manner similar to the embodiments described earlier.

### 3. Detailed Description of Second AV Processing Unit

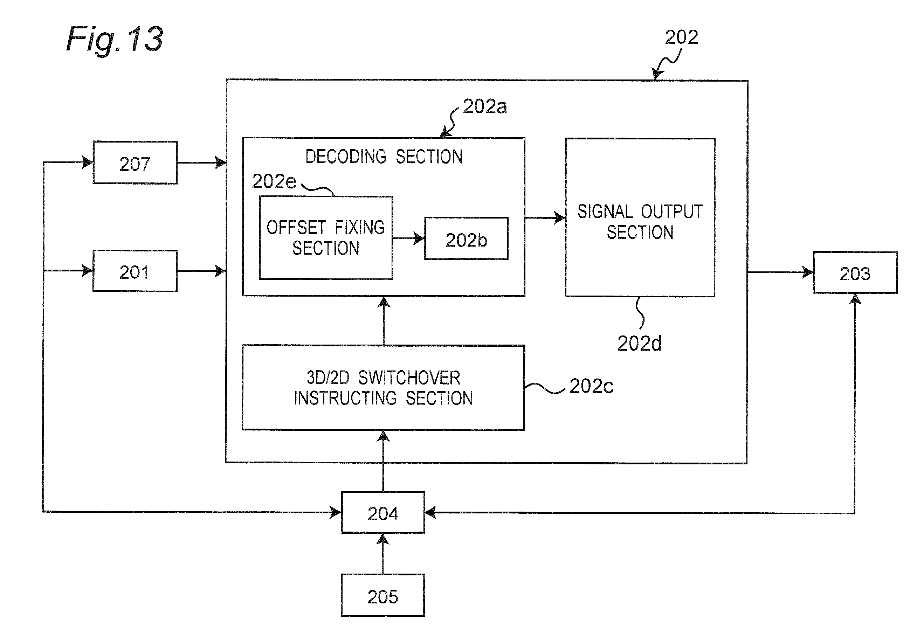

Fig. 13 is a block diagram illustrating a detailed structure of the second AV processing unit 202 in the image reproducing apparatus according to the fifth embodiment. Single or plural semiconductor devices may constitute the second AV processing unit 202. The second AV processing unit 202 has a decoding section 202a operable to generate the image signal from the image stream signal including the 3D contents inputted from the disc 200 or the tuner 207, the signal output section 202d operable to output the image signal inputted from the decoding section 202a to the second input/output unit 203, and the 3D/2D display switchover instructing section 202c operable to receive the instruction to switch contents to be displayed between 3D and 2D. The decoding section 202a includes the 3D format non-2D image generator 202b, wherein the 3D format non-2D image generator 202b, to output the 2D image signal in the output mode for 3D image signal, generates an image signal repeatedly including only one of the left eye image and the right eye image paired therewith as the left eye image and the right eye image paired therewith in the 3D image signal. The decoding section 202a further includes an offset fixing section 202e operable to fix the amount of offset of the additional information variable over time to a constant given value and outputting the resulting image signal to the 3D format non-2D image generator 202b. The signal output section 202d may be an output terminal.

Based on the instruction inputted from the remote controller of the image reproducing apparatus by way of the second remote control signal receiving unit 205, and the instruction inputted from the remote controller of the image display apparatus by way of the image display apparatus 11 and the second input/output unit 203, the CPU 204 can send an instruction to generate whether the image signal for 3D display mode (for example, image signal in the format @S101 illustrated in Fig. 5) or the image signal for non-3D (2.D) display mode (for example, image signal in the format @S203 illustrated in Fig. 5) is generated from the image data of the contents to the 3D/2D display switchover instructing section 202c.

The 3D/2D display switchover instructing section 202c which received the instruction from the CPU 204 can control the decoding section 202a, 3D format non-2D image generator 202b, and offset fixing section 202e based on the received instruction.

The second AV processing unit 202 of the image reproducing apparatus 12 according to the fifth embodiment may be a semiconductor device having: the decoding section 202a operable to input therein the contents data and generate the image signal of the contents by superposing the first image of the contents on the second image of the contents in a positionally adjusted manner based on the amount of offset which depends on the offset information included in the contents; the offset fixing section 202e operable to fix the amount of offset to a constant given value which is invariable over time; the 3D/2D instructing section 202c operable to receive the instruction relating to the image display of the contents and instruct the decoding section 202a on whether the amount of offset which depends on the offset information or the amount of offset having the fixed value is used based on the received instruction; and the output section 202d operable to output the image signal generated by the decoding section 202a in accordance with the 3D image output format which is the format for outputting the image signal for stereoscopic image display, wherein, in the case where 3D/2D instruction section 202c receives the instruction to set the image display of the contents to the non-3D display when the signal output section 202d outputs the image signal on which the first image is superposed based on the amount of offset which depends on the offset information in accordance with the 3D image output format, the decoding section 202a superposes the first image on the second image in a positionally adjusted manner based on the amount of offset having the fixed value to generate the image signal, and the signal output section 202d outputs the generated image signal in accordance with the 3D image output format.

### 4. Modified Embodiment

In the example illustrated in Fig. 11, the IG stream or PG stream does not contain therein L/R menu or L/R subtitle which are respectively used for L and R in the 3D image display. In the IG/PG stream, therefore, the menu or subtitle having the same contents other than the offset is superposed on the L video 305 and the R video 307 of the image data when outputting. However, two different data may be prepared for L and R in the IG/PG stream, so that they are separately superposed on the L video 305 and the R video 307 as L menu (L subtitle) and R menu (R subtitled . In this case also, the processing steps for the offset are carried out as described in the fifth embodiment.

In the case where two different data of the additional information, such as the menu graphics 301 or the subtitle 303, are prepared for 2D and 3D (L and R) in advance as described earlier, the additional information data respectively for 2D and 3D may be selectively superposed in place of the processing steps of S503 and S506 illustrated in Fig. 12. In the additional information for 2D, the offset has a prefixed value. When the 3D contents are displayed on the image display apparatus 11 in the 3D display mode in Step S503, the two additional information for L and R for 3D mode to which the offset is added are respectively superposed on the L and R video images to generate the image signal, and the generated image signal is outputted to the image display apparatus 11. When the image display mode of the image display apparatus 11 is switched from the 3D display mode to the 2D display mode in Step S506, the additional information for 2D in which the value of offset is previously fixed (for example, fixed to zero) is superposed on the L and R video images.

In the case where the additional information for 2D and 3D are separately provided, the additional information for 2D is used when the image display mode of the image display apparatus 11 is switched to the 2D display mode, so that disturbance (fluctuation) of the image to be displayed can be avoided. If the additional information for L alone is used when the image display apparatus 11 is displaying the L side of the 3D image signal in the 2D display mode, the L data of the additional information generally prepared for 3D, which may be different to the information for 2D, may adversely affect the displayed image (parallax is possibly included in the L-side data of the additional information prepared for 3D). Therefore, the problem can be solved by using the different additional information in the 2D display mode and the 3D display mode.

The second AV processing unit 202 of the image reproducing apparatus 12 can receive the additional information for 3D display and the additional information for 2D display from the disc. The second input/output unit 203 superposes one of the additional information for 3D display and the additional information for 2D display on the stereoscopic image as the additional information based on the information received from the image display apparatus 11.

The present embodiment is similarly feasible when BD-Java (registered trademark), which is most often used in graphics menu of blue ray discs, is used in place of the IG stream described earlier. The present embodiment is also feasible when text information (character codes), which is text subtitle (TextST illustrated in Fig. 11) is used in place of the PG stream described earlier.

In the present embodiment, the menu graphics 301 and the subtitle data 302 were described as examples of the additional information. The additional information may be information of OSD (On Screen Display) recorded in the reproducing apparatus.

In the present embodiment, the CEC of HDMI was described as a means for communicating the image display mode of the image display apparatus 11 from the image display apparatus 11 to the image reproducing apparatus 12. Other examples which can be employed are LAN, network, serial communication, infrared communication, and wireless communication.

The image reproducing apparatus according to the present embodiment can smoothly and speedily switch the image display mode when the image display mode of the image display apparatus is switched between the 3D display mode and the 2D display mode, and correctly display the additional information in the 2D display mode.

The black screen was called blackout in this specification. The blackout may include not only a screen displayed in black colors but also a screen displayed in other colors such as a green screen. The blackout may include an image with its part disrupted due to the HDMI authentication. More specifically, the blackout includes screens possibly displayed between the start and end of the HDMI interface authentication.

### Industrial Applicability

The embodiments are advantageous for an image reproducing apparatus connected to an image display apparatus by a transmission path to display a stereoscopic image.

### Reference Signs List

- 11: Image Display Apparatus
- 12: Image Reproducing Apparatus
- 13: Stereoscopic Glasses
- 101: First Input/Output unit
- 102: First AV Processing Unit
- 103: Display Unit
- 104: First Remote Control Signal Receiving Unit
- 105: Transmitting Unit
- 200: Disc
- 201: Disc Drive Unit
- 202: Second AV Processing Unit
- 202a: Decoding Section
- 202b: 3D Format 2D Image Generator
- 202c: 3D/2D Display Switchover Instructing Section
- 202d: Signal Output Section
- 202e: Offset Fixing Section
- 203: Second Input/Output Unit
- 204: CPU (Controller)
- 205: Second Remote Control Signal Receiving Unit
- 206: Antenna
- 207: Tuner
- 301: Menu Graphics
- 303: Subtitle Data
- 305: L Video
- 307: R Video
- d: Depth Difference

## Claims

1. An image reproducing apparatus capable of outputting a 3D image signal which can display a stereoscopic image or a non-3D image signal which can display a non-stereoscopic image to an image display apparatus, comprising:
an AV processing unit operable to input data of contents and generate the 3D image signal or the non-3D image signal from the inputted data of the contents;
an output unit operable to output the 3D image signal or the non-3D image signal generated by the AV processing unit to the image display apparatus in accordance with a 3D image output format, the 3D image output format being a format for outputting an image signal for stereoscopic image display; and
a receiving unit operable to receive an instruction inputted by a user,
wherein, in a case where the receiving unit receives the instruction to display the contents in non-3D images when the output unit outputs the 3D image signal in accordance with the 3D image output format, the AV processing unit generates the non-3D image signal from the data of the contents and the output unit outputs the non-3D image signal to the image display apparatus in accordance with the 3D image outputs mode.

2. The image reproducing apparatus as claimed in Claim 1, further comprising an input unit operable to receive an instruction inputted to the image display apparatus by the user from the image display apparatus,
wherein, in a case where the input unit receives an instruction to switch an image display on the image display apparatus from a 3D display to a non-3D display when the output unit outputs the 3D image signal in accordance with the 3D image output mode, the AV processing unit generates the non-3D image signal from the data of the contents and the output unit outputs the non-3D image signal to the image display apparatus in accordance with the 3D image output mode.

3. The image reproducing apparatus as claimed in Claim 1, wherein the AV processing unit determines whether the contents are 3D contents or non-3D contents from identification information of the contents included in the data of the contents and
wherein, in a case where the receiving unit receives the instruction to switch contents to be reproduced from the contents to another contents and the AV processing unit determines that the another contents are the non-3D contents when the output unit outputs the 3D image signal in accordance with the 3D image output mode, the AV processing unit generates the non-3D image signal from data of the another contents and the output unit outputs the non-3D image signal to the image display apparatus in accordance with the 3D image output mode.

4. The image reproducing apparatus as claimed in Claim 3, wherein the AV processing unit inputs the data of the contents and the identification information of the contents, both of the data of the contents and the identification information of the contents being recorded in a recording medium.

5. The image reproducing apparatus as claimed in Claim 3, wherein the AV processing unit inputs the data of the contents and the identification information of the contents, both of the data of the contents and the identification information of the contents being received from outside of the image reproducing apparatus.

6. The image reproducing apparatus as claimed in Claim 3, wherein the another contents are data broadcast including the non-3D contents.

7. The image reproducing apparatus as claimed in Claim 1, wherein the 3D image signal includes a left eye image which is an image for a left eye and a right eye image which is an image for a right eye, the left eye image and the right eye image including parallax therebetween, and
wherein, in a case where the receiving unit receives the instruction to display the contents in non-3D images when the output unit outputs the 3D image signal in accordance with the 3D image output format, the AV processing unit generates the non-3D image signal that includes only either one of the left eye image and the right eye image.

8. An image reproducing apparatus capable of outputting a 3D image signal which can display a stereoscopic image or a non-3D image signal which can display a non-stereoscopic image to an image display apparatus, comprising:
an AV processing unit operable to input data of contents and generate the 3D image signal or the non-3D image signal from the inputted data of the contents;
an output unit operable to output the 3D image signal or the non-3D image signal generated by the AV processing unit to the image display apparatus in accordance with a 3D image output format, the 3D image output format being a format for outputting an image signal for stereoscopic image display; and
an receiving unit operable to receive an instruction inputted by a user,
wherein, in a case where the receiving unit receives the instruction for special reproduction of the contents when the output unit outputs the 3D image signal in accordance with the 3D image signal output format, the AV processing unit generates the non-3D image signal from the data of the contents and the output unit outputs the non-3D image signal to the image display apparatus in accordance with the 3D image output format.

9. The image reproducing apparatus as claimed in Claim 5, wherein the special reproduction includes at least one of fast forward reproduction and fast rewind reproduction.

10. An image reproducing apparatus capable of outputting a 3D image signal which can display a stereoscopic image or a non-3D image signal which can display a non-stereoscopic image to an image display apparatus, comprising:
an AV processing unit operable to input data of contents and generate the 3D image signal on which information indicative of a stereoscopic image is superposed or the non-3D image signal on which the information indicative of the stereoscopic image is not superposed from the inputted data of the contents;
an output unit operable to output the 3D image signal or the non-3D image signal generated by the AV processing unit to the image display apparatus in accordance with a non-3D image output format, the non-3D image output format being a format for outputting an image signal for non-stereoscopic image display; and
an receiving unit operable to receive an instruction inputted by a user,
wherein:
the AV processing unit determines whether the contents are 3D contents or non-3D contents from identification information of the contents included in the data of the contents;
the AV processing unit generates the 3D image signal from the data of the contents in the non-3D image output format when the contents are determined as the 3D contents;
the AV processing unit generates the non-3D image signal from the data of the contents in the non-3D image output format when the contents are determined as the non-3D contents, and
wherein, in a case where the receiving unit receives the instruction to switch contents to be reproduced from the contents to another contents and the AV processing unit determines that the other contents are the 3D contents when the output unit outputs the non-3D image signal in accordance with the non-3D image output mode, the AV processing unit generates the 3D image signal from data of the another contents and the output unit outputs the 3D image signal to the image display apparatus in accordance with the non-3D image output format.

11. The image reproducing apparatus as claimed in Claim 10, wherein, when the contents are determined as the non-3D contents, the AV processing unit generates the non-3D image signal for a non-stereoscopic image display, on which information indicative of a non-stereoscopic image is superposed.

12. A semiconductor device, comprising:
a decoding unit operable to input data of contents and generate a 3D image signal which can display a stereoscopic image or a non-3D image signal which can display a non-stereoscopic image from the inputted data of the contents;
a 3D/non-3D display switchover instructing unit operable to receive an instruction for image display of the contents and instruct the decoding unit to generate either one of the 3D image signal and the non-3D image signal based on the received instruction; and
a signal output unit operable to output an image signal generated by the decoding unit in accordance with a 3D image output format, the 3D image output format being a format for outputting an image signal for stereoscopic image display.

13. A method for generating an image signal and outputting the generated image signal to an image display apparatus in an image reproducing apparatus capable of outputting a 3D image signal which can display a stereoscopic image or a non-3D image signal which can display a non-stereoscopic image, comprising:
inputting data of contents by an AV processing unit;
generating the 3D image signal in a 3D image output format, the 3D image output format being a format for outputting an image signal for stereoscopic image display, from the inputted data of the contents by the AV processing unit, and outputting the 3D image signal received from the AV processing unit to the image display apparatus in accordance with the 3D image output mode by an output unit;
receiving an instruction inputted by a user to switch an image display on the image display apparatus from a 3D display to a non-3D display by a receiving unit; and
after the receiving, generating the non-3D image signal by the AV processing unit in accordance with the received instruction, and outputting the non-3D image signal to the image display apparatus in accordance with the 3D image output mode by the output unit.
